# EUROPEAN PATENT SPECIFICATION

(11) **EP 1 773 917 B1**
(45) Date of publication and mention of the grant of the patent: **21.12.2011**
(21) Application number: 05749216.7
(22) Date of filing: 03.06.2005
(51) Int. Cl.: C08G 77/24, C08G 77/26, C09D 183/08

(54) **BLOCK CONDENSATES OF ORGANOFUNCTIONAL SILOXANES,THEIR PREPARATION AND USE, AND THEIR PROPERTIES**
BLOCKKONDENSATE VON ORGANISCHEN SILOXANEN, HERSTELLUNG UND VERWENDUNG DAVON UND EIGENSCHAFTEN
CONDENSATS EN BLOCS DE SILOXANES ORGANOFONCTIONNELS: PREPARATIONS ET UTILISATIONS, ET PROPRIETES

(30) Priority: 29.07.2004 DE 102004037043
(43) Date of publication of application: 18.04.2007
(73) Proprietor: Evonik Degussa GmbH, 45128 Essen (DE)
(72) Inventor: JUST, Eckhard, 79618 Rheinfelden (DE); GIESSLER-BLANK, Sabine, 44227 Dortmund (DE); STANDKE, Burkhard, 79540 Lörrach (DE)
(86) International application number: PCT/EP2005/052559
(87) International publication number: WO 2006/010666

(56) References cited:
- EP-A- 0 960 921
- EP-A- 1 101 787
- US-A1- 2003 186 066
- US-A1- 2004 005 469

## Description

The present invention relates to fluoro-organofunctional siloxanes, to compositions which comprise these fluoro-organosiloxanes, to a process for the preparation of these organosilicon compounds, and also to their use.

"Easy-clean" is the everyday term used for surface properties that substantially repel oil, water, and soiling.

Easy-clean coatings which are based on hydrolyzable and condensable fluoroorganosilanes and which have properties that repel oil, water, and soiling have long been known (inter alia DE 834 002, DE 15 18 551, DE 195 44 763).

Among the existing coating systems, those based on fluoro-organofunctional silanes and, respectively, siloxanes are the most suitable in terms of easy-clean properties. Materials that have been described for the production of an easy-clean coating are appropriate undiluted systems, solvent-containing systems, emulsions, and also aqueous systems (inter alia WO 92/21729, WO 95/23830).

The general method of preparing water- or alcohol-containing coating systems has been to combine the starting materials, such as hydrolyzable fluoroalkyl-, amino-, and optionally alkylsilanes, and solvent, water, and catalyst, and to carry out hydrolysis and condensation. A possible method here begins by pre-hydrolyzing the silanes that are not fluoro-organofunctional, for example the aminoalkoxysilane, the fluorosilane component then being added and condensed onto the material (WO 92/21729).

However, another possible method pre-hydrolyzes the water-insoluble silane component, i.e. the fluorosilane and optionally the alkylalkoxysilane, and then condenses the water-soluble aminosilane onto the material (EP 0 738 771 A).

Yet another possible method hydrolyzes and cocondenses said organoalkoxysilane components in the presence of a catalyst (EP 0 846 717 A, EP 0 846 716 A, EP 1 101 787 A).

EP 0 960 921 A discloses a process for the preparation of oligomeric organopolysilane cocondensates, where cocondensates were produced from at least two hydrolyzable organoalkoxysilanes, and then the particles were enlarged via oligomerization.

Another possible process which has also been very generally proposed is block polymerization or partial block copolymerization, the resulting systems being used for the preparation of emulsions (WO 95/23830).

However, the easy-clean coatings known hitherto have low abrasion resistance.

US 2004/0005469 A1 describes a process for making a product with a long-lasting easily cleaned surface. During this process a mixture including a hydrolysable, network-forming gel and a hydrophobic substance is applied to the surface of the product. The gel is preferably formed from SiO₂, Al₂O₃, Fe₂O₃, In₂O₃, SnO₂, ZrO₂, B₂O₃ and/or TiO₂. The hydrophobic substance is preferably chemically linked in the gel network when the coating is formed.

US 2003/0186066 A1 relates to an air-drying Silane coating composition containing an epoxy or acrylic resin, an optional silicic ester or alkylsilicate, an aminoalkylsilane component, an optional organoalkyloxysilane, and possible auxiliaries,methods of the use thereof, and articles and substrates coated accordingly.

It was therefore an object of the present invention to provide a further easy-clean system which after application has better bonding and abrasion resistance of the coating.

The invention achieves the object through the features of the patent claims.

Surprisingly, it has been found that an improvement in the bonding to a substrate surface, or an improvement in the abrasion resistance of easy-clean coatings based on fluoroorganosiloxanes can be achieved if use is made of an active ingredient that is based on block condensates containing fluoro-organofunctional siloxane, or on block condensates based on a mixture composed of fluoroorganosiloxane and of organosiloxane, this being a preparation process in which at least one block unit or at least one block condensate is based on a proportion of tetraalkoxysilane. Here and hereinafter, a block unit means an organosiloxane or an oligomeric mixture of the relevant organosiloxane. Here and hereinafter, block condensates are condensation products derived from at least two block units with different functionality.

Surprisingly, the proportion of tetraalkoxysilane can achieve not only greater control in the linkage of the siloxane units to one another but also to any other additives present, and moreover good bonding to a substrate surface on application. The present coating, based on this inventive system, therefore features not only - to use abbreviated terminology - easy-clean properties and better abrasion resistance but also excellent chemicals resistance, in particular with respect to solvents, alkaline solutions, acids, and various cleaning compositions, such as household cleaners.

It has also been found that the resistance of said coatings to boiling water can be improved via the teaching of the invention, this being particularly advantageous for ceramic coatings. A further long-lasting improvement in applications for anti-graffiti purposes, in particular on concrete, could also be obtained via these properties of the novel coating system.

The novel coating systems also feature excellent application properties, and in particular excellent crosslinking within the coating and to the substrate surface, even at room temperature.

The inventive coating systems can moreover be used advantageously for corrosion-protection applications.

The present invention therefore provides a composition which comprises
(i) at least one block condensate of organofunctional siloxanes of the general formula I

   [F]ₑ[Q_{c}P_{b}]_{d} (I)

   and/or
(ii) optionally, a mixture composed of e[F] and d(c[Q]+b[P]) and, where appropriate d[Q_{c}P_{b}],
   where in each case independently of one another in the abovementioned features (i) and (ii)
   the block units F, Q, P and/or QP may have linkage to one another by way of at least one Si-O-Si bond,
   e, c and d are identical or different, and each may be a number from 1 to 10, preferably from 1 to 5 and b may be a number from 0 to 10, preferably from 0 to 5, and in particular c ≥ b,
   F is a linear, cyclic, branched, or crosslinked cocondensate unit, i.e. block unit F, from the series of fluororgano-/aminoalkyl-/alkyl-/alkoxy- or hydroxysiloxanes of the general formula II

   R[-O-Si(OR)₂]_{w}[-O-Si(R^{f})(R¹)₁₋ₕ(OR)ₕ]ₓ[-O-Si{R^{a}(HX)_{g}}(CH₃)₁₋ᵢ(OR)ᵢ]_{y}[-O-Si(R²)₂₋ⱼ(OR)ⱼ]_{z}(OR) (II),

   where R^{f} is a mono-, oligo- or polyfluorinated organoalkyl or organoaryl group of the formula (IIa) R³-Y_{#}-(CH₂)₂-, where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # =0 or 1,
   R^{a} is an aminoalkyl group of the general formula (IIb) H₂N(CH₂)_{§}[(NH)_{$}(CH₂)_{&}]_{β}-, where 0 ≤ § ≤ 6, 0 ≤ & ≤ 6, $ = 0 if § = 0 then β = 1, $ = 1 if § > 0 then β = 1 or 2, and X is an acid radical from the series chloride, formate, and acetate where g = 0 or 1 or 2 or 3,
   h, I, and j, independently of one another, are 0 or 1,
   groups R² are identical or different, and R² is a linear, cyclic, or branched alkyl group having from 1 to 18 carbon atoms,
   R¹ is a linear, cyclic, or branched alkyl group having from 1 to 8 carbon atoms,
   groups R are identical or different and are a hydrogen atom or a linear, cyclic, or branched alkyl group having from 1 to 4 carbon atoms, or RO is an -O-Si- bond to at least one unit from the series F, Q or P or QP,
   x, y, z and w are identical or different, where x > 0, y > 0, z ≥ 0, w ≥ 0 and (x+y+z+w) ≥ 2 and preferably x is a number from 1 to 10, y is a number from 1 to 40, in particular from 2 to 10, z is a number from 0 to 10, and w is a number from 0 to 10,
   Q is an alkyl silicate unit, i.e. block unit Q, of the general formula III

   (RO)ₙSiO_{(4-n)/2} (III),

   where groups R are identical or different and are a hydrogen atom or a linear, cyclic, or branched alkyl group having from 1 to 4 carbon atoms, or RO are an -O-Si- bond to at least one unit from the series F, Q, P, or QP, and n = 1 or 2 or 3, where the average degree of oligomerization in the units Q is preferably from 3 to 20, where the range of degree of oligomerization in the mixture is generally from 1 to 50,
   and
   P is a linear, cyclic, branched, or crosslinked condensate unit or, respectively, cocondensate unit, i.e. block unit P, of the general formula IV

   R[-O-Si(R²)₂₋ᵥ(OR)ᵥ]ᵣ[-O-Si{R^{a}(HX)_{g}}(CH₃)₁₋ᵤ(OR)ᵤ]ₛ(OR) (IV),

   where R^{a} is an aminoalkyl group of the general formula (IVa) H₂N(CH₂)_{§[}(NH)_{$}(CH₂)_{&}]_{β}-, where 0 ≤ § ≤ 6, 0 ≤ & ≤ 6, $ = 0 if § = 0 then β = 1, $ = 1 if § > 0 then β = 1 or 2, and X is an acid radical from the series chloride, formate, and acetate where g = 0 or 1 or 2 or 3,
   groups R² are identical or different, and R² is a linear, cyclic, or branched alkyl group having from 1 to 18 carbon atoms,
   v = 0 or 1 or 2, and u is 0 or 1,
   groups R are identical or different and are a hydrogen atom or a linear, cyclic, or branched alkyl group having from 1 to 4 carbon atoms, or RO is an -O-Si- bond to at least one unit from the series F, Q or P,
   r and s are identical or different, and r ≥ 1, s ≥ 0 and (r+s) ≥ 1, and s is preferably a number from 0 to 30, and r is preferably a number from 2 to 20.

Inventive compositions generally feature a total organosiloxane content of from 0.001 to 99.9% by weight, where the proportion of block units F, based on the amount of organosiloxane in the composition, is preferably from 0.005 to 99% by weight, particularly preferably from 0.05 to 80% by weight, very particularly preferably from 0.1 to 40% by weight, in particular from 0.5 to 15% by weight.

The content of said organosiloxanes in inventive water- and/or alcohol-containing compositions is advantageously from 0.005 to 40% by weight, preferably from 0.05 to 20% by weight, particularly preferably from 0.1 to 15% by weight, very particularly preferably from 0.5 to 10% by weight, in particular from 1.5 to 6% by weight.

Inventive compositions generally also feature from 0.001 to 99.9% by weight, preferably from 0.01 to 40% by weight, particularly preferably from 0.05 to 20% by weight, very particularly preferably from 0.1 to 15% by weight content of alcohol from the series methanol, ethanol, isopropanol, and a mixture composed of two of the abovementioned alcohols.

Inventive compositions may also comprise from 0.001 to 99.5% by weight, preferably from 1 to 80% by weight, particularly preferably from 5 to 70% by weight, very particularly preferably from 20 to 60% by weight, in particular from 30 to 55% by weight, content of water.

Inventive compositions moreover suitably comprise, based on the composition, from 0.001 to 5% by weight, preferably from 0.01 to 2% by weight, particularly preferably from 0.05 to 1% by weight, in particular from 0.1 to 0.6% by weight, of acid. HX acids of formulae II and IV are particularly preferred.

Inventive compositions therefore suitably have a pH of from 2 to 6, preferably from 2.5 to 4.5, particularly preferably from 3 to 4. The pH here may moreover be further stabilized via addition of a buffer.

Inventive compositions may moreover have from 0 to 10% by weight, preferably from 2 to 6% by weight, particularly preferably from 4 to 5% by weight, content of wetting auxiliaries. Wetting auxiliaries particularly preferred are butyl glycol and polyethersiloxanes, such as polyethertrisiloxanes, e.g. TEGOPREN^{®} 5840 or Tego Wet 270 from Goldschmidt (Degussa AG).

Other preferred constituents in inventive compositions are from 0 to 20% by weight, particularly preferably from 1 to 15% by weight, in particular from 5 to 12% by weight, of inorganic or organic particles. The median particle size d₅₀ of these particles is advantageously from 5 nm to 1 µm, particularly preferably from 20 nm to 0.8 µm, very particularly preferably from 200 nm to 300 nm, and the respective components of the composition here give 100% by weight in total.

Particles selected here are preferably from the series Teflon^{®}, Levasil^{®}, Christol^{®}, Aerosil^{®}, i.e. a fumed silica, precipitated silica, aluminum or aluminum oxides, aluminum hydroxides, or oxide hydroxides, titanium or titanium oxides, zirconium or zirconium oxides, to mention just a few examples.

By way of example, therefore, use may be made of 3417N-N polytetrafluoroethylene (PTFE) dispersion from DuPont with 60% by weight content of PTFE particles and with an average particle size of 0.2 µm. Levasil^{®} products provide another example and are colloidal silica soles in water whose solids content, by way of example, is 21% by weight, with an average particle size of 15 nm, the particles suitably having a specific surface area (BET) of about 200 m²/g.

Inventive compositions advantageously have a flashpoint of from 20 to 90°C, preferably from 25 to 60°C. By way of example, flashpoint may be determined to DIN 51 755.

The present invention also provides block condensates of the general formula [F]ₑ[Q_{c}P_{b}]_{d} (I) as claimed in claim 1.

Said block condensates generally feature good water solubility. Inventive compositions are therefore generally advantageously capable of dilution with water. However, other diluents that may be used are, by way of example, alcohols, such as methanol, ethanol, or isopropanol, to mention just a few diluents.

The present invention also provides inventive compositions or block condensates obtainable via reaction of block units F with block units Q, P, and/or QP, or with organosilane/organosiloxane mixtures which comprise at least one of the abovementioned hydrolyzable block units, by
- c1) diluting block unit F optionally with an alcohol, adding an organic or inorganic acid and from 0.5 to 150 mol of water per mole of Si of the organosilane or siloxane used, whereupon at least partial hydrolysis of the block units used takes place, then adding block unit Q and block unit P, and allowing the mixture to react, the molar proportion of Si here and hereinafter always being calculated as Si of the organosilane or of the organosiloxane mixture of the corresponding block unit,
or
- c2) diluting block unit F optionally with an alcohol, mixing with Q, P, and/or block unit QP, then adding an organic or inorganic acid and, using from 0.5 to 150 mol of water per mole of Si of the siloxanes used, carrying out partial hydrolysis and block-condensation,
or
- c3) diluting block unit F optionally with an alcohol, adding an organic or inorganic acid and from 0.5 to 150 mol of water per mole of Si of the siloxane used, with at least partial hydrolysis, adding block unit QP, and allowing the mixture to react,
or
- c4) diluting block units Q, P, and/or QP, optionally with an alcohol, adding an organic or inorganic acid and from 0.5 to 1.5 mol of water per mole of Si of the siloxanes used, and at least partially hydrolyzing, then adding block unit F and also from 0 to 148.5 mol of water per mole of Si of the siloxanes used, and allowing the mixture to react,
or
- c5) diluting block unit F optionally with an alcohol, mixing with from 0.5 to 150 mol of water per mole of Si of the siloxanes used, and with an organic or inorganic acid, and then adding a tetraalkoxysiloxane, and allowing the mixture to react.

The quotient calculated here from the molar Si ratio F/Q is preferably from 0.1 to 8, particularly preferably from 0.3 to 5, in particular from 0.5 to 3, and the quotient calculated from Q/P is preferably from 0.5 to 10, particularly preferably from 0.8 to 4, in particular from 1 to 3, and reference is made here to the proportions or Si ratios of the block units F, Q, and P or QP given by e, c, b, and d in formula I.

The procedures described above may moreover use the block units F, Q, P, and PQ in a previously hydrolyzed form, thus then permitting the addition of acid and, respectively, water to be omitted.

The inventive reaction here is suitably carried out at a temperature of from 0 to 100°C, preferably from 20 to 70°C, particularly preferably at from 25 to 65°C.

In particular, the partial hydrolysis of block units in the present preparation process is carried out at a temperature of from 0 to 60°C, preferably from 20 to 55°C, particularly preferably from 40 to 50°C.

According to the invention, the block condensation is carried out at a preferred temperature of from 25 to 100°C, preferably from 40 to 70°C, particularly preferably from 50 to 65°C.

In the inventive preparation process it is moreover possible to add, based on the composition, from 0 to 10% by weight, preferably from 2 to 6% by weight, particularly preferably from 4 to 5% by weight, of at least one wetting auxiliary to the mixture composed of block units, or after the partial hydrolysis of the block units, or after the block condensation. This can advantageously affect the orientation of the fluoro-organofunctional groups in the active ingredient, in particular in terms of the application. Wetting auxiliaries particularly preferred are a polyethersiloxane or butyl glycol.

In another method of obtaining inventive compositions or block condensates, inorganic or organic particles are preferably added to the mixture of the block units, or after partial hydrolysis of the block units, or after block condensation, during the preparation process. A suitable method here uses, based on the composition, from 0 to 20% by weight, particularly preferably from 1 to 15% by weight, in particular from 5 to 10% by weight, of abovementioned nanoscale to microscale particles, generally using good and thorough mixing for this incorporation process.

Another method of obtaining inventive compositions or block condensates advantageously adds from 0.001 to 10 mol, preferably from 0.005 to 5 mol, particularly preferably from 0.01 to 1 mol, very particularly preferably from 0.05 to 0.5 mol, of tetraalkoxysilane, in particular tetraethoxysilane, per mole, calculated as Si, of the block condensate, to block units F, or to a mixture composed of block units F and P, Q, and/or PQ, or after the partial hydrolysis of said block units, or after the block condensation, and allowing the reaction to continue.

In the inventive process, the product of the block-condensation reaction may also be allowed to continue reacting for a period of from 5 minutes to 5 hours, preferably from 15 minutes to 2 hours, with stirring, at a temperature of from 25 to 65°C, preferably from 40 to 55°C, and this can generally give a substantially stabler condensation state of the block units at room temperature, even for periods extending to 2 months and longer.

In the present process it is also possible to remove some of the alcohol from the system, following the step of block-condensation or of continued reaction, for example via distillation at reduced pressure, suitably at a temperature of from 20 to 40°C. However, an alcohol and/or water may also be added to the inventive product of the block-condensation reaction.

The starting components for the preparation of an inventive composition or of inventive block condensates may advantageously be obtained as follows:
block units F are preferably obtainable by mixing
   - a1) at least one aminoalkylsilane of the general formula (V)

      H₂N(CH₂)_{§1}(NH)_{$}(CH₂)_{&}]_{β}-Si(CH₃)ₜ(OR)₃₋ₜ (V),

      where 0 <§<6, 0≤&≤6, §=0 if §=0 then β=1, $=1 if §>0 then β=1 or 2, t = 0 or 1, and R is a linear, cyclic, or branched alkyl group having from 1 to 4 carbon atoms,
   and at least one fluoroorganosilane of the general formula (VI)

   R³-Y_{#}-(CH₂)₂-Si(R¹)ₘ(OR)₃₋ₘ (VI),

   where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1, R¹ is a linear, cyclic, or branched alkyl group having from 1 to 8 carbon atoms, m = 0 or 1, and R is a linear, cyclic, or branched alkyl group having from 1 to 4 carbon atoms,
in a molar ratio of ≥ 0.29:1, particularly preferably from 0.3:1 to 2:1, in particular from 0.33:1 to 0.5:1, optionally adding an organic or inorganic acid, preferably hydrochloric acid, formic acid, or acetic acid, the desired degree of neutralization of the amino groups present here being in particular 100%, diluting optionally with at least one alcohol, preferably methanol, ethanol, or n-propanol or isopropanol and, with addition of from 0.5 to 150 mol of water per mole of Si of the silane components used, carrying out at least partial hydrolysis and cocondensation. Optionally, excess alcohol may then be removed from the system, and the pH may be adjusted to < 11. This generally gives a mixture of cocondensates with random distribution, i.e. preferably one type of the block units given by F.
In another preferred method, block units F are obtainable by
- a2) diluting at least one fluoroorganosilane of the general formula (VI)

   R³-Y_{#}-(CH₂)₂-Si(R¹)ₘ(OR)₃₋ₘ (VI)

   where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1, R¹ is a linear, cyclic, or branched alkyl group having from 1 to 8 carbon atoms, m = 0 or 1, and R is a linear, cyclic, or branched alkyl group having from 1 to 4 carbon atoms,
optionally with at least one alcohol, preferably methanol, ethanol, or n-propanol or isopropanol and, with addition of from 0.5 to 100 mol of water per mole of Si of the silane components used, and with addition of an organic or inorganic acid, preferably hydrochloric acid, formic acid, or acetic acid, in particular from 0.1 to 3 mol per mole of Si of the silanes used, carrying out at least partial hydrolysis and condensation.

In another preferred method, block units F are obtained by
- a3) mixing at least one aminoalkylsilane of the general formula (V)

   H₂N(CH₂)_{§}[(NH)_{$}(CH₂)_{&}]_{β}-Si(CH₃)ₜ(OR)₃₋ₜ (V),

   where 0<§≤6, 0≤&≤6, $=0 if §=0 then β=1, $=1 if §>0 then β=1 or 2, t = 0 or 1, and R is a linear, cyclic, or branched alkyl group having from 1 to 4 carbon atoms,
and at least one fluoroorganosilane of the general formula (VI)

R³-Y_{#}-(CH₂)₂-Si(R¹)ₘ(OR)₃₋ₘ (VI),

where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1, R¹ is a linear, cyclic, or branched alkyl group having from 1 to 8 carbon atoms, m = 0 or 1, and R is a linear, cyclic, or branched alkyl group having from 1 to 4 carbon atoms,
and at least one alkoxysilane of the general formula VII

(R²)ₖSi(OR)₄₋ₖ (VII),

where groups R² are identical or different and R² is a linear, cyclic or branched alkyl group having from 1 to 18 carbon atoms, k = 0 or 1 or 2, and R is a linear, cyclic, or branched alkyl group having from 1 to 4 carbon atoms,
are mixed in a molar ratio of ≥ 0.29:1, preferably from 0.3:1 to 4:1, where the molar ratio of fluoroorganosilane to alkoxysilane is preferably from 1:0 to 1:5, in particular from 1 :0.001 to 1:1 adding from 0.12 to 1 mol of an organic or inorganic acid, preferably hydrochloric acid, formic acid, or acetic acid per mole of silane component to the silane mixture present, diluting optionally with at least one alcohol, preferably methanol, ethanol, or n-propanol or isopropanol and, with addition of from 0.5 to 150 mol of water per mole of Si of the silane components used, carrying out at least partial hydrolysis and cocondensation.

In another preferred method, block units Q, P, and/or QP are obtainable by
- b1) diluting at least one tetraalkoxysilane with an alcohol and, with addition of from 0.5 to 30 mol of water per mole of alkoxysilane, carrying out hydrolysis and condensation, thus giving block units given by Q, or
- b2) diluting at least one alkylalkoxysilane of the abovementioned formula VII, where k = 1 or 2, with an alcohol and, with addition of from 0.5 to 30 mol of water per mole of alkoxysilane, carrying out hydrolysis and condensation, thus giving block units given by P, or
- b3) to prepare block units QP, using at least one tetraalkoxysilane together with at least one alkylalkoxysilane of the general formula VII where k = 1 or 2 in a molar ratio of from 0.5:1 to 10:1, diluting the mixture optionally with an alcohol and, with addition of acid and from 0.5 to 150 mol of water per mole of the silanes used carrying out hydrolysis and cocondensation,
or
- condensing tetraalkoxysilane onto block units P, by using as initial charge 1 mol of the block unit P, calculated as Si of the siloxane of the block unit P, diluting with an alcohol, adding from 0.5 to 10 mol of tetraalkoxysilane per mole of Si of the block unit P and, with addition of acid and from 0.5 to 150 mol of water, carrying out partial hydrolysis and condensation,
or
- condensing at least one alkylalkoxysilane onto block units Q, by using as initial charge from 0.5 to 10 mol of the block unit Q, calculated as Si of the siloxane of the block unit Q, diluting with an alcohol, adding 1 mol of at least one alkylalkoxysilane of the general formula VII and, with addition of acid and from 0.5 to 150 mol of water, carrying out partial hydrolysis and condensation,
or
- condensing block units P and Q, by using as initial charge block units P composed of b2) and Q composed of b1) with a molar ratio, in each case based on their Si content, of from 1:10 to 2:1 in the mixture, diluting optionally with an alcohol and, with addition of from 0.5 to 30 mol of water per mole of Si of the siloxane mixture present, carrying out hydrolysis and block-condensation.

The reactions given by b1) and b3) are suitably carried out at a temperature between room temperature and about 60°C, and those given by b2) are suitably carried out at from 0 to about 60°C, the hydrolysis time in b2) here generally being about 75% shorter than in b1). The pH here should always be from 1 to 5, preferably from 1.5 to 2.5.

The following fluoroorganosilanes of formula VI are preferably used for the preparation of said block units: F₃C(CF₂)₅(CH₂)₂-Si(OCH₃)₃, F₃C(CF₂)₅(CH₂)₅-Si(OC₂H₅)₃, F₃C(CF₂)₇(CH₂)₂-Si(OCH₃)₃, F₃C(CF₂)₇(CH₂)₂-Si(OC₂H₅)₃, F₃C(CF₂)₉(CH₂)₂-Si(OCH₃)₃, F₃C(CF₂)₉(CH₂)₂-Si(OC₂H₅)₃, F₃C(CF₂)₁₁(CH₂)₂-Si(OCH₃)₃, F₃C(CF₂)₁₁(CH₂)₂-Si(OC₂H₅)₃, HCF₂(CF₂)O(CH₂)₃Si(OCH₃)₃, HCF₂(CF₂)O(CH₂)₃Si(OC₂H₅)₃.

The aminoalkylsilane used of formula V moreover preferably comprises N-(2-aminoethyl)-3-aminopropyltrimethoxysilane, alkoxysilanes having free triaminoalkyl functions, non-exclusive examples being H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, [H₂N(CH₂)₂]₂N(CH₂)₃-Si(OCH₃)₃, [H₂N(CH₂)₂]₂N(CH₂)₃-Si(OC₂H₅)₃, in particular DYNASYLAN^{®} TRIAMO, and mixtures composed of at least two aminoalkylsilanes.

Preference is also given to alkoxysilanes of the formula VII from the series tetra-n-propylsilane, methyltrimethoxysilane, methyltriethoxysilane, n-propyltrimethoxysilane, n-propyltriethoxysilane, isobutyltrimethoxysilane, isobutyltriethoxysilane, n-octyltrimethoxysilane, isooctyltriethoxysilane, hexadecyltrimethoxysilane, hexadecyltriethoxysilane, octadecyltrimethoxysilane, and octadecyltriethoxysilane, to mention just a few alkoxysilanes.

Other preferred starting components for block units F in the present process are those given by the teaching of EP1101787A, EP0846716A, and EP 0 846 717 A and the entire scope of the contents of the abovementioned citations is hereby incorporated into the disclosure of the present patent application.

Other block units Q which may be used in the inventive preparation process comprise alkyl polysilicates, i.e. oligomeric silicic esters, in particular ethyl polysilicate, e.g. DYNASIL^{®} 40, DYNASIL^{®} MKS, or DYNASIL^{®} GH2.

Block units P or QP incorporated into the disclosure of this present patent application moreover preferably comprise the cocondensates and, respectively, condensates given by EP 0 716 127 A, EP 1 205 505 A , E P 0 518 056 A, EP 0 814 110 A, EP 1 205 481 A, EP 0 675 128 A.

The present invention therefore also provides a process for the preparation of inventive compositions or of inventive block condensates, which comprises reacting block units F with block units Q, P, and/or QP, or reacting organosilanes/organosiloxane mixtures which contain at least one of the abovementioned hydrolyzable block units, by
- c1) diluting block unit F optionally with an alcohol, adding an organic or inorganic acid and from 0.5 to 150 mol of water per mole of Si of the siloxane used, whereupon at least partial hydrolysis of the block units used takes place, then adding block unit Q and block unit P, and allowing the mixture to react,
or
- c2) diluting block unit F optionally with an alcohol, mixing with Q, P, and/or block unit QP, then adding an organic or inorganic acid and, using from 0.5 to 150 mol of water per mole of Si of the siloxanes used, carrying out partial hydrolysis and block-condensation,
or
- c3) diluting block unit F optionally with an alcohol, adding an organic or inorganic acid and from 0.5 to 150 mol of water per mole of Si of the siloxane used, with at least partial hydrolysis, adding block unit QP, and allowing the mixture to react,
or
- c4) diluting block units Q, P, and/or QP, optionally with an alcohol, adding an organic or inorganic acid and from 0.5 to 1.5 mol of water per mole of Si of the siloxanes used, and at least partially hydrolyzing, then adding block unit F and also from 0 to 148.5 mol of water per mole of Si of the siloxanes used,
or
- c5) diluting block unit F optionally with an alcohol, mixing with from 0.5 to 150 mol of water per mole of Si of the siloxanes used, and with an organic or inorganic acid, and then adding a tetraalkoxysilane, and allowing the mixture to react.

The following method is generally used to carry out the inventive process for the preparation of inventive block condensates or inventive compositions which comprise at least one inventive block condensate:
At least one type of block unit from the series Q or QP, P and, respectively, Q and P is generally used as initial charge. The mixture may also be diluted with a solvent, optionally with the corresponding alcohol. If the block units used here are not by this stage present in an at least partially hydrolyzed state, the block units used containing alkoxy groups should be at least partially hydrolyzed via controlled addition of acid and water, suitably with good and thorough mixing and temperature control. Block units F containing fluoroorgano groups and containing alkoxy or hydroxy groups, or an appropriate mixture comprising block units F, are then added, and block-condensation is carried out. The block-condensation, too, is generally carried out in a controlled manner with temperature control and optionally with addition of a wetting auxiliary. Monomeric tetraalkoxysilane may also be added during the block-condensation. At least some solvent or alcohol may also be removed from the product mixture.

However, another possible procedure for carrying out the inventive process uses as initial charge a mixture composed of the respective starting block units to be used, optionally dilutes and - where necessary - with addition of acid and water carries out controlled hydrolysis and block-condensation.

However, another method for carrying out the inventive reaction first carries out controlled pre-hydrolysis of the block units F and then carries out block-condensation using block units of type Q or QP and, respectively, Q and P.

In particular as given in version c5) of the process, it is also possible to omit any separate synthetic step for the preparation of the species Q, because tetraalkoxysilanes are highly reactive compounds in the presence of water or water and acid, and under these conditions hydrolyze very rapidly and condense, i.e. form block units Q. Tetraalkoxysilane can therefore be used directly for carrying out the block-condensation after block units F and, respectively, F, P and/or PQ, water, and optionally acid have been used as initial charge.

The value to which the pH of the respective reaction mixtures is generally controlled when carrying out hydrolysis, condensation, or block-condensation in versions of the present process is generally from 1 to 6, preferably from 1 to 4.

The versions described above of the process therefore generally give mixtures or compositions of inventive block condensates that are storage-stable for some months and which can be applied advantageously as they stand or after dilution with water and/or alcohol to a substrate, such as glass, ceramics, or concrete. Examples of application methods are application by polishing, spray-application, jet-application, doctor-application, brush-application, spreader-application, or application by immersion. The coating can then be allowed to dry and optionally subjected to subsequent heat treatment at from 60 to 300°C, i.e. stoved, for example.

The present invention also provides the advantageous use of an inventive block condensate or of an inventive composition which comprises at least one inventive block condensate, or of a block condensate or a composition obtainable from, or prepared by the inventive process, as an agent for easy-clean applications and/or corrosion-protection applications, or in agents for easy-clean applications and/or corrosion-protection applications, or in paints, inks, and lacquers.

The invention also provides the use of an inventive block condensate or of an inventive composition which comprises at least one block condensate, or said substances obtainable from or prepared by the inventive process, as starting material for the preparation of an agent, as claimed in claim 30, and here it is also possible for inventive compositions or block condensates to be mixed advantageously with other formulations, e.g. with lacquers.

The invention also provides a coating obtainable via use of an inventive block condensate, of an inventive composition, or of an inventive agent, where the inventive ingredient is applied as it stands, in the form of a composition, or in an agent, to a substrate surface, and is allowed to cure. This advantageously gives layer thicknesses of about 1-400 µm. The inventive coating features chemicals resistance, in particular with respect to dilute acids, alkaline solutions, and solvents, abrasion and weathering, and also resistance to boiling water. These coatings can also bring about a marked improvement in corrosion protection. They also feature excellent adhesion to surfaces in easy-clean applications, i.e. they have properties that repel oil, water, and soiling, in particular for protection from graffiti, i.e. in applications as anti-graffiti agent or anti-graffiti coating. Q-based coatings, in particular, feature excellent adhesion to the substrate and outstanding abrasion resistance.

The present invention therefore also provides items whose surface has been coated with a coating as claimed in claim 32, e.g. those with an inventive coating on a smooth or porous substrate surface, in particular metals, aluminum, aluminum alloys, copper, copper alloys, iron, iron alloys, in particular steel, steel armouring, glass, in particular plate glass, glass facades, windshields, and also concrete, e.g. reinforced concrete, concrete components, facades, masonry, sandstone, calcium silicate brick, ceramics, such as fired bricks, roof tiles, wall tiles, glazes, stone, such as marble, slate, granite, and also synthetic stone, synthetic materials, such as polymers, e.g. polyurethane, polycarbonate, and also natural materials, such as wood and cellulose. Preferred methods of applying the coating to the substrate surface which has previously been suitably cleaned are polishing, spray-application, jet-application, doctor-application, brush-application, spreader-application, or application by immersion, generally followed by brief drying.

The examples below provide further illustration of the present invention but do not restrict its subject-matter.

### Examples

### Inventive example 1

50 g of ethanol, 21.6 g of DYNASIL^{®} A (tetraethyl orthosilicate), and 2.0 g of formic acid (85% strength) were used as initial charge in a 1 l mixer with magnetic stirrer. 178.8 g of water were metered in within a period of about 10 minutes at from 50 to 56°C, with stirring. After 1.5 hours, 14.4 g of MTES (methyltrimethoxysilane) were added, and the mixture was stirred at about 65°C for 45 minutes. 133.2 g of DYNASYLAN^{®} F 8815 (a water-based organosiloxane containing fluoroalkyl/aminoalkyl/alkoxy and hydroxy groups with a molar ratio of the groups R^{f}:R^{a} of 3:1) were then added, and the mixture was stirred at from 58 to 64°C for 15 minutes. This gave a clear to slightly opaque solution which was stable for more than two months.

### Inventive example 2

Formulation as Example 1, to which 1.7 g of DUPONT 3417B-N Teflon dispersion, a 60% strength aqueous dispersion, 0.2 µm PTFE particles, basic, comprising surfactant, were added dropwise, with stirring gentle, and stirring was then continued for from 5 to 10 minutes. This gave a slightly cloudy solution.

### Inventive example 3

105.6 g of ethanol, 14.4 g of DYNASIL^{®} A (tetraethyl orthosilicate), and 4.0 g of formic acid (85% strength) were used as initial charge in a 1 I mixer with magnetic stirrer. 400.0 g of water were metered in within a period of about 10 minutes at from 42 to 50°C, with stirring. After 1.5 hours, 9.6 g of MTES (methyltrimethoxysilane) were added, and the mixture was stirred at about 65°C for 45 minutes. 266.4 g of DYNASYLAN^{®} F 8815 were then added, and the mixture was stirred at from 58 to 64°C for 15 minutes. This gave a clear to slightly opaque solution which was stable for more than two months.

### Comparative example A

10% by weight of DYNASYLAN^{®} F 8800 were mixed in water with 0.5% by weight of 37% strength hydrochloric acid. The mixture was then stirred at room temperature for 2 hours, i.e. by analogy with EP 0 960 921 A. The solution was clear to slightly colloidal. The coatings given by this formulation on glass had only comparatively low abrasion resistance, cf. Table 1.

### Inventive example 4

204 g of water and 2 g of formic acid (85% strength) were used as initial charge in a 1 l mixer with magnetic stirrer. 21.6 g of DYNASIL^{®} A were metered in within a period of about 20 minutes at from 32 to 56°C, with stirring. After 1 hour, 14.5 g of MTES were metered in rapidly and the mixture was stirred at about 60°C for half an hour. 133 g of DYNASYLAN^{®} F 8815 were then added, and stirring of the mixture was continued for 1.5 hours. 24 g of Levasil^{®} (200 nm particles) were then added and the mixture was stirred for 20 minutes. The formulation was allowed to cool during that process. The resultant solution should be filtered through a corrugated filter prior to application of this formulation. The solution obtained was slightly cloudy.

### Inventive example 5

The solution was prepared by analogy with Example 4, but 5% by weight of butyl glycol were also added to the formulation here. This achieved still better orientation of the fluoroalkyl groups on the subsequent substrate, via retarded crosslinking.

### Inventive example 6

### Examples of application of the agents from Inventive examples 1 to 4 and from Comparative example A

Formulations described above were applied to test specimens composed of glass. The size of the glass plates was 0.15 m × 0.15 m. The test specimens had previously been freed in a known manner from dust and grease.

The formulations were applied in the form of a liquid film, using a 35 µm doctor, and smoothed three times. The average layer thickness produced was about 1 < 400 µm. The average consumption of the coating solution during the application process was 22.3 g_{/}m²_{.}

After the coating process, the glass plates were cured at room temperature for 3 days.

### Performance tests on the coatings

The following performance tests were carried out in order to assess the coatings, cf. Table 1:
1. The abrasion test served for assessment of the chemical bonding of the "easy-clean" coatings to smooth inorganic surfaces.
   The test equipment used comprised an abrasion tester from GARDNER, 250 ml glass beaker with stirrer bar, magnetic stirrer, and balance.
   The abrasion test [modified Erichsen test (DIN 53 778, Part 2), in which the brushes were replaced by an abrasive sponge] was carried out with a Glitzi abrasive sponge and a weight of 1 kg applied to an area of 7.5 cm x 10.4 cm. The sliding of the mechanical system here was parallel to the substrate. One reciprocal movement is termed a cycle. Deionized water was used as lubricant.
   Prior to the start of the abrasion test, the angle of contact of the freshly coated glass plates with water was first measured ("untreated"). After every 5 000 cycles, the hydrophobic properties of the coating were determined by measuring contact angle. Care had to be taken to ensure that sufficient water was always present on the surfaces during the abrasion test.
   The contact angle with water was determined (DIN 828) using Krüss G10 contact-angle measurement equipment, via 6 individual measurements at various sites on the surface. The average (measured value) was calculated from the individual values. The term easy-clean properties ceases to apply when the contact angle is < 80°.
2. Cross-cut hardness:
   The method of DIN EN ISO 2409 was used to determine and evaluate the hardness of a coating.

**Table 1:**

| Formulation of example | Substrate | "Untreated" contact angle [degrees] | "Abraded" contact angle [degrees] | Cross-cut hardness |
|---|---|---|---|---|
| 1 | Glass | 111 | 100 | 2HS |
| 2 | Glass | 108 | 100 | - |
| 3 | Glass | 112 | 104 | - |
| 3 | Wood (particle board) | 136 | - | - |
| 3 | Polyurethane | 113 | - | - |
| 3 | Leather | 117 | - | - |
| 3 | Aluminum | 90 | - | - |
| A | Glass | 106 | 58 | - |
| 4 | Glass | 91 | 90 | 9HS |
| Formulation of example | Substrate | "Untreated" contact angle [degrees] | "Abraded" contact angle [degrees] | Cross-cut hardness |
| Uncoated blind specimen | Glass | 15 | 15 | - |

Table 1 shows that the contact angle of untreated plate glass is about 15 degrees. In contrast, the untreated coatings on the substrates have a contact angle of from 90 to 136 degrees. After the grinding procedure has been carried out ("abraded"), the contact angles are smaller than in the untreated state. However, for Inventive examples 1-4 a reduction of only about 10% was seen, contrasting with about 40% for Comparative example A. Inventive easy-clean coatings therefore feature markedly improved abrasion resistance when compared with comparable prior art.

### Inventive example 7

### a) Preparation of a water-soluble block condensate from: aminoalkyltrialkoxysilane, fluoroalkyltrialkoxysilane, tetraalkoxysilane, and alkyltrialkoxysilane

### Preparation of block unit 1 (cocondensate composed of aminosilane and fluorosilane):

77.8 g of aminopropyltriethoxysilane and 412.5 g of DYNASYLAN^{®} F 8261 were mixed and temperature-controlled to about 60°C. 20.9 g of water were then metered in within a period of 5 minutes. The hydrolysis and cocondensation were continued at reflux for 5 hours at about 80°C. 20.9 g of formic acid (85% by weight in water) were then metered in within a period of about 10 minutes at about 50°C. Temperature control of the mixture at about 80°C was continued for about 4 hours.

### Preparation of block unit 2 (cocondensate composed of tetraalkoxysilane and alkyltrialkoxysilane):

7.4 g of formic acid and 1 351.5 g of water were used as initial charge. A mixture composed of 82.5 g of tetraethoxysilane and 27.5 g of methyltriethoxysilane was added within a period of 1 minute, at about 40°C. The mixture was heated to about 75°C, and slight reflux occurred. The hydrolysis and cocondensation of the silane units was continued for a further 6 hours at about 75°C.

After cooling of the block unit 2 to 35°C, block unit 1 was added within a period of two minutes. This gave a milky mixture. The mixture was then heated to about 50°C, and the hydrolysis alcohols were removed at a pressure of from 150 to 120 mbar by way of a distillation bridge. The amount of distillate removed during the distillation was replaced by 4 portions of water, the amount being 136.3 g, so that the weight of the reaction vessel contents remained almost constant. The distillation had been completed within a period of 7 hours. The liquid still present in the reaction vessel was opaque and storage-stable for some months. It can be used as an impregnating material with properties that repel water, oil, soiling, and paint and ink, for example for porous, mineral construction materials.

### b) Use of the material of a)

The product from a) was spray-applied to the smooth molded side of a concrete test specimen, using HVLP equipment with consumption rate of about 100 g/m², with about ½ hour of drying at room temperature (about 20°C, about 50% relative humidity). The product from a) was then again spray-applied to this pre-treated concrete surface, using an HVLP spray gun with consumption rate of about 20 g/m². The concrete panel had by this stage developed hydrophobic properties, and the fine droplets formed were therefore spread with a brush to give a homogeneous film of liquid. After drying (½hour, 20°C, 50% relative humidity), another 20 g/m² of product from a) were applied to the concrete panel, using the HVLP process. Again, the fine droplets formed were spread with a soft brush to give a homogeneous film of liquid. The concrete surface was assessed after drying and curing (16 hours, 60°C), and anti-graffiti properties were assessed. The color had become darker, only slightly, but visibly. The surface was smooth and non-tacky. A felt-tip pen mark (Edding 3000) applied could be removed from the surface with ethanol, leaving no residue. The appearance and feel of the treated substrate were entirely satisfactory, and it had anti-graffiti properties.

### c) Comparative example: Use of a cocondensate of the prior art

The product from Example 1 of EP 1 101 787 A1 was spray-applied to the smooth molded side of a concrete test specimen, using HVLP equipment with consumption rate of about 100 g/m², with about ½ hour of drying at room temperature (about 20°C, about 50% relative humidity). The product was then again spray-applied to this pre-treated concrete surface, using an HVLP spray gun with consumption rate about 20 g/m². The concrete panel had by this stage developed hydrophobic properties, and the fine droplets formed were therefore spread with a brush to give a homogeneous film of liquid. After drying (½ hour, 20°C, 50% relative humidity), about another 20 g/m² of product were applied to the concrete panel, using the HVLP process. Again, the fine droplets formed were spread with a soft brush to give a homogeneous film of liquid. The concrete surface was assessed after drying and curing (16 hours, 60°C). The darkening of color was clearly visible. The surface was smooth but tacky. There was therefore a risk that soiling particles would accumulate on the tacky surface. A felt-tip pen mark (Edding 3000) applied could be removed from the surface with ethanol, leaving no residue. The appearance and feel of the treated substrate were not ideal, but anti-graffiti properties were entirely satisfactory.

## Claims

1. A composition which comprises
(i) at least one block condensate of organofunctional siloxanes of the general formula I
[F]ₑ[Q_{c}P_{b}]_{d} (I)
and/or
(ii) at least one mixture composed of e[F] and d(c[Q]+b[P]) and, where appropriate d[Q_{c}P_{b}],
where in each case independently of one another in the abovementioned features (i) and (ii)
the block units F, Q, P and/or QP may,have linkage to one another by way of at least one Si-O-Si bond,
e, c and d are identical or different, and each may be a number from 1 to 10, and b may be a number from 0 to 10,
F is a linear, cyclic, branched, or crosslinked cocondensate unit from the series of fluororgano-/aminoalkyl-lalkyl-/alkoxy- or hydroxysiloxanes of the general formula II
R[-O-Si(OR)₂]_{w}[-O-Si(Rf)(R1)₁₋ₕ(OR)ₕ]ₓ[-O-Si{R^{a}(HX)_{g}}(CH₃)₁₋ₗ(OR)ᵢ]_{y}[-O-Si(R²)₂₋ⱼ(OR)ⱼ]_{z}(OR) (II),
where R^{f} is a mono-, oligo- or polyfluorinated organoalkyl or organoaryl group of the formula (IIa) R³-Y_{#}-(CH₂)₂-, where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1,
R^{a} is an aminoalkyl group of the general formula (IIb) H₂N(CH₂)_{§}[(NH)_{$}(CH₂)_{&}]_{β}-, where 0 ≤ § ≤ 6, 0 ≤ & ≤ 6, $ = 0 if § = 0 then β=1, $ = 1 if § > 0 then β =1 or 2, and is selected from the group of N-(2-aminoethyl)-3-aminopropyl and triaminoalkyl functions, and X is an acid radical from the series chloride, formate, and acetate where g = 0 or 1 or 2 or 3,
h, I, and j, independently of one another, are 0 or 1,
groups R² are identical or different, and R² is a linear, cyclic, or branched alkyl group having from 1 to 18 carbon atoms,
R¹ is a linear, cyclic, or branched alkyl group having from 1 to 8 carbon atoms,
groups R are identical or different and are a hydrogen atom or a linear, cyclic, or branched alkyl group having from 1 to 4 carbon atoms, or RO is an -O-Si- bond to at least one unit from the series F, Q or P,
x, y, z and w are identical or different, and x, and also y, is a number > 0,
and z, and also w, is a number ≥ 0, where (x+y+z+w) ≥ 2,
Q is an alkyl silicate unit of the general formula III
(RO)ₙSiO_{(4-n)/2} (III),
where groups R are identical or different and are a hydrogen atom or a linear, cyclic, or branched alkyl group having from 1 to 4 carbon atoms, or RO are an -O-Si- bond to at least one unit from the series F, Q, or P, and n = 1 or 2 or 3,
and
P is a linear, cyclic, branched, or crosslinked condensate unit or, respectively, cocondensate unit of the general formula IV
R[-O-Si(R²)₂₋ᵥ(OR)ᵥ]ᵣ[-O-Si{R^{a}(HX)_{g}}(CH3)₁₋ᵤ(OR)ᵤ]ₛ(OR) (IV),
where R^{a} is an aminoalkyl group of the general formula (IVa) H₂N(CH₂)_{§}[(NH)_{$}(CH₂)_{&}]_{β}-, where 0 ≤ § ≤ 6, 0 ≤ & ≤ 6, $ = 0 if § = 0 then R=1, $= 1 if § > 0 then β = 1 or 2, and X is an acid radical from the series chloride, formate, and acetate where g = 0 or 1 or 2 or 3,
groups R² are identical or different, and R² is a linear, cyclic, or branched alkyl group having from 1 to 18 carbon atoms,
v = 0 or 1 or 2, and u is 0 or 1,
groups R are identical or different and are a hydrogen atom or a linear, cyclic, or branched alkyl group having from 1 to 4 carbon atoms, or RO is an -O-Si- bond to at least one unit from the series F, Q or P,
r and s are identical or different, and r ≥ 0, s ≥ 0, where (r+s) ≥ 1.

2. The composition as claimed in claim 1,
which has
from 0.001 to 99.9% by weight content of organosiloxanes.

3. The composition as claimed in claim 1 or 2,
which has
some content of alcohol from the series methanol, ethanol, isopropanol, butanol, and a mixture composed of at least two of the abovementioned alcohols.

4. The composition as claimed in any of claims 1 to 3,
which has
from 0.001 to 99.9% by weight content of alcohol.

5. The composition as claimed in any of claims 1 to 4,
which has
from 0.001 to 99.5% by weight content of water.

6. The composition as claimed in any of claims 1 to 5,
which has
based on the composition, from 0.001 to 5% by weight content of acid.

7. The composition as claimed in any of claims 1 to 6,
which has
a pH of from 1 to 6.

8. The composition as claimed in any of claims 1 to 7,
which has
from 0.001 to 99.5% by weight content of water and/or of substantially water soluble solvents.

9. The composition as claimed in any of claims 1 to 8,
which has
from 0 to 10% by weight content of wetting auxiliaries.

10. The composition as claimed in any of claims 1 to 9,
which has
from 0 to 20% by weight content of inorganic or organic particles.

11. The composition as claimed in any of claims 1 to 10,
which has
a flashpoint of from 20 to 105°C.

12. The composition as claimed in any of claims 1 to 11,
which
is water-thinnable.

13. The composition as claimed in any of claims 1 to 12,
which
has liquid, treacly, or creamy consistency.

14. A block condensate of the general formula I
[F]ₑ[Q_{c}P_{b}]_{d} (I)
as claimed in claim 1.

15. A block condensate as claimed in claim 14,
which is
water-soluble.

16. A composition or block condensate as claimed in any of claims 1 to 15, obtainable via reaction of block units F with block units Q, P, and/or QP, by
- c1) diluting block unit F optionally with an alcohol, adding an organic or inorganic acid and from 0.5 to 150 mol of water per mole of Si of the siloxane used, whereupon at least partial hydrolysis of the block units used takes place, then adding block unit Q and block unit P, and allowing the mixture to react,
or
- c2) diluting block unit F optionally with an alcohol, mixing with Q, P, and/or block unit QP, then adding an organic or inorganic acid and, using from 0.5 to 150 mol of water per mole of Si of the siloxanes used, carrying out partial hydrolysis and block-condensation,
or
- c3) diluting block unit F optionally with an alcohol, adding an organic or inorganic acid and from 0.5 to 150 mol of water per mole of Si of the siloxane used, with at least partial hydrolysis, adding block unit QP, and allowing the mixture to react,
or
- c4) diluting block units Q, P, and/or QP, optionally with an alcohol, adding an organic or inorganic acid and from 0.5 to 1.5 mol of water per mole of Si of the siloxanes used, and at least partially hydrolyzing, then adding block unit F and also from 0 to 148.5 mol of water per mole of Si of the siloxanes used, and allowing the mixture to react,
or
- c5) diluting block unit F optionally with an alcohol, mixing with from 0.5 to 150 mol of water per mole of Si of the siloxanes used, and with an organic or inorganic acid, and then adding a tetraalkoxysiloxane, and allowing the mixture to react.

17. The composition or block condensate obtainable as claimed in claim 16,
wherein
the reaction is carried out at a temperature of from 0 to 100°C.

18. The composition or block condensate obtainable as claimed in claim 16 or 17,
wherein
the partial hydrolysis of block units is carried out at a temperature of from 0 to 60°C.

19. The composition or block condensate obtainable as claimed in claim 16 or 17,
wherein
the block-condensation is carried out at a temperature of from 25 to 100°C.

20. The composition or block condensate obtainable as claimed in claim 16 or 17,
wherein
at least one wetting auxiliary is added to the mixture composed of block units, or after the partial hydrolysis of the block units, or after the block-condensation.

21. The composition or block condensate obtainable as claimed in claim 20,
wherein
a polyethersiloxane or butyl glycol is added as wetting auxiliary.

22. The composition or block condensate obtainable as claimed in any of claims 16 to 21,
wherein
inorganic or organic particles are added to the mixture composed of block units, or after the partial hydrolysis of the block units, or after the block-condensation.

23. The composition or block condensate obtainable as claimed in any of claims 16 to 22,
wherein
from 0.001 to 10 mol of tetraalkoxysilane per mole, calculated as Si, of the block condensate is added to block units F or to a mixture composed of block units F and P, Q, and/or PQ, or after the partial hydrolysis of said block units, or after the block-condensation, and reaction is allowed to continue.

24. The composition or block condensate obtainable as claimed in any of claims 16 to 23,
wherein
the product of the block-condensation reaction is permitted to continue reaction for a period of from 5 minutes to 5 hours at a temperature of from 25 to 65°C, with stirring.

25. The composition or block condensate obtainable as claimed in any of claims 16 to 23,
wherein
at least some alcohol is removed from the system following the block-condensation step or the continued-reaction step.

26. The composition or block condensate obtainable as claimed in any of claims 16 to 25, where use is made of block units F obtained by mixing
- a1) at least one aminoalkylsilane of the general formula (V)
H₂N(CH₂)_{§}[(NH)_{$}(Ch₂)_{&}]_{β}-Si(CH₃)ₜ(OR)₃₋ₜ (V),
where 0 ≤ § ≤ 6, 0 ≤ & ≤ 6, $ = 0 if § = 0 then β = 1, $ = 1 if § > 0 then β = 1 or 2, t = 0 or 1, and R is a linear, cyclic, or branched alkyl group having from 1 to 4 carbon atoms, and the aminoalkylalkoxysilane is selected from the group of N-(2-aminoethyl)-3-aminopropyltrimethoxysilane and alkoxysilanes having free triaminoalkyl functions,
and at least one fluoroorganosilane of the general formula (VI)
R³-Y_{#}-(CH₂)2-Si(R¹)ₘ(OR)₃₋ₘ (VI),
where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1, R¹ is a linear, cyclic, or branched alkyl group having from 1 to 8 carbon atoms, m = 0 or 1, and R is a linear, cyclic, or branched alkyl group having from 1 to 4 carbon atoms,
in a molar ratio of ≥ 0.29:1, optionally adding at least one organic or inorganic acid, diluting optionally with at least one alcohol and, with addition of from 0.5 to 150 mol of water per mole of Si of the silane components used, carrying out at least partial hydrolysis and cocondensation, or
- a2) diluting at least one fluoroorganosilane of the general formula (VI)
R³-Y_{#}-(CH₂)₂-Si(R¹)ₘ(OR)₃₋ₘ (VI)
where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1, R¹ is a linear, cyclic, or branched alkyl group having from 1 to 8 carbon atoms, m = 0 or 1, and R is a linear, cyclic, or branched alkyl group having from 1 to 4 carbon atoms,
optionally with at least one alcohol and, with addition of from 0.5 to 150 mol of water per mole of Si of the silane components used, and with addition of an organic or inorganic acid, carrying out at least partial hydrolysis and condensation, or
- a3) mixing at least one aminoalkylsilane of the general formula (V)
H₂N(CH₂)_{§}[(NH)_{$}(CH₂)_{&}]_{β}-Si(CH₃)ₜ(OR)₃₋ₜ (V),
where 0 ≤ § ≤ 6, 0 ≤ & ≤ 6, $ = 0 if § = 0 then β = 1, $ = 1 if § > 0 then β = 1 or 2, t= 0 or 1, and R is a linear, cyclic, or branched alkyl group having from 1 to 4 carbon atoms, and the aminoalkylalkoxysilane is selected from the group of N-(2-aminoethyl)-3-aminopropyltrimethoxysilane and alkoxysilanes having free triaminoalkyl functions,
and at least one fluoroorganosilane of the general formula (VI)
R³-Y_{#}-(CH₂)₂-Si(R¹)ₘ(OR)₃₋ₘ (VI),
where R³ is a linear, cyclic, or branched mono-, oligo-, or polyfluorinated alkyl group having from 1 to 13 carbon atoms or a mono-, oligo-, or polyfluorinated aryl group, Y is a CH₂, O, or S group, where # = 0 or 1, R¹ is a linear, cyclic, or branched alkyl group having from 1 to 8 carbon atoms, m = 0 or 1, and R is a linear, cyclic, or branched alkyl group having from 1 to 4 carbon atoms,
and at least one alkoxysilane of the general formula VII
(R²)ₖSi(OR)₄₋ₖ (VII),
where groups R² are identical or different and R² is a linear, cyclic or branched alkyl group having from 1 to 18 carbon atoms, k = 0 or 1 or 2, and R is a linear, cyclic, or branched alkyl group having from 1 to 4 carbon atoms,
are mixed in a molar ratio of ≥ 0.29:1 for aminoalkylsilane: total of fluoroorganosilane and alkoxysilane, adding from 0.12 to 1 mol of an organic or inorganic acid per mole of silane component to the silane mixture present, diluting optionally with at least one alcohol and, with addition of from 0.5 to 150 mol of water per mole of Si of the silane components used, carrying out at least partial hydrolysis and cocondensation.

27. The composition or block condensate obtainable as claimed in any of claims 16 to 26, where use is made of block units Q, P, and/or QP obtainable by
- b1) diluting at least one tetraalkoxysilane with an alcohol and, with addition of from 0.5 to 30 mol of water per mole of alkoxysilane, carrying out hydrolysis and condensation, or
- b2) diluting at least one alkylalkoxysilane of the abovementioned formula VII, where k = 1 or 2, with an alcohol and, with addition of from 0.5 to 30 mol of water per mole of alkoxysilane, carrying out hydrolysis and condensation, or
- b3) to prepare block units QP, using at least one tetraalkoxysilane together with at least one alkylalkoxysilane of the general formula VII where k = 1 or 2 in a molar ratio of from 0.5:1 to 10:1, diluting the mixture optionally with an alcohol and, with addition of acid and from 0.5 to 150 mol of water per mole of the silanes used carrying out hydrolysis and cocondensation,
or
- condensing tetraalkoxysilane onto block units P, by using as initial charge 1 mol of the block unit P, calculated as Si of the siloxane of the block unit P, diluting with an alcohol, adding from 0.5 to 10 mol of tetraalkoxysilane per mole of Si of the block unit P and, with addition of acid and from 0.5 to 150 mol of water, carrying out partial hydrolysis and condensation,
or
- condensing at least one alkylalkoxysilane onto block units Q, by using as initial charge from 0.5 to 10 mol of the block unit Q, calculated as Si of the siloxane of the block unit Q, diluting with an alcohol, adding 1 mol of - at least one alkylalkoxysilane of the general formula VII and, with addition of acid and from 0.5 to 150 mol of water, carrying out partial hydrolysis and condensation,
or
- condensing block units P and Q, by using as initial charge block units P composed of b2) and Q composed of b1) with a molar ratio, in each case based on their Si content, of from 1:10 to 2:1 in the mixture, diluting optionally with an alcohol and, with addition of from 0.5 to 30 mol of water per mole of Si of the siloxane mixture present, carrying out hydrolysis and block-condensation.

28. A process for the preparation of compositions or block condensates as claimed in any of claims 1 to 27,
which comprises
reacting block units F with block units Q, P, and/or QP, by
- c1) diluting block unit F optionally with an alcohol, adding an organic or inorganic acid and from 0.5 to 150 mol of water per mole of Si of the siloxane used, whereupon at least partial hydrolysis of the block units used takes place, then adding block unit Q and block unit P, and allowing the mixture to react,
or
- c2) diluting block unit F optionally with an alcohol, mixing with Q, P, and/or block unit QP, then adding an organic or inorganic acid and, using from 0.5 to 150 mol of water per mole of Si of the siloxanes used, carrying out partial hydrolysis and block-condensation,
or
- c3) diluting block unit F optionally with an alcohol, adding an organic or inorganic acid and from 0.5 to 150 mol of water per mole of Si of the siloxane used, with at least partial hydrolysis, adding block unit QP, and allowing the mixture to react,
or
- c4) diluting block units Q, P, and/or QP, optionally with an alcohol, adding an organic or inorganic acid and-from 0.5 to-1.5 mol of water per mole of Si of the siloxanes used, and at least partially hydrolyzing, then adding block unit F and also from 0 to 148.5 mol of water per mole of Si of the siloxanes used, and allowing the mixture to react,
or
- c5) diluting block unit F optionally with an alcohol, mixing with from 0.5 to 150 mol of water per mole of Si of the siloxanes used, and with an organic or inorganic acid, and then adding a tetraalkoxysilane, and allowing the mixture to react.

29. The use of a block condensate or composition which comprises at least one block condensate, as claimed in any of claims 1 to 15, or of a block condensate or composition obtainable as claimed in any of claims 16 to 27, or of a block condensate or composition prepared as claimed in claim 28, as an agent, or in an agent, for easy-clean applications and/or corrosion-protection applications, or in agents for easy-clean applications and/or corrosion-protection applications, or in paints, inks, and lacquers.

30. The use of a block condensate or composition which comprises at least one block condensate, as claimed in any of claims 1 to 15, or of a block condensate or composition obtainable as claimed in any of claims 16 to 27, or of a block condensate or composition prepared as claimed in claim 28, as starting material for preparing an agent as claimed in claim 29.

31. The use of a block condensate or composition which comprises at least one block condensate, as claimed in any of claims 1 to 15, or of a block condensate or composition obtainable as claimed in any of claims 16 to 27, or of a block condensate or composition prepared as claimed in claim 28, 29, or 30, for the production of coatings with high abrasion resistance.

32. A coating obtainable via use of a block condensate, of a composition, or of an agent as claimed in claims 1 to 31.

33. An item whose surfaces have been equipped with a coating as claimed in claim 32.

## Patentansprüche

1. Zusammensetzung, die
(i) mindestens ein Blockkondensat organofunktioneller Siloxane der allgemeinen Formel I
[F]ₑ[Q_{c}P_{b}]_{d} (I)
und/oder
(ii) mindestens ein Gemisch aus e[F] und d(c[Q]+b[P]) und gegebenenfalls d[Q_{c}P_{b}] enthält,
wobei in den zuvor genannten Merkmalen (i) und (ii) jeweils unabhängig voneinander,
die Blockeinheiten F, Q, P und/oder QP über mindestens eine Si-O-Si-Bindung miteinander verknüpft sein können,
e, c und d gleich oder verschieden sind und jeweils für eine Zahl von 1 bis 10 stehen können und b eine Zahl von 0 bis 10 annehmen kann,
F für eine lineare, cyclische, verzweigte oder vernetzte Cokondensateinheit aus der Reihe der Fluororgano-/Aminoalkyl-/Alkyl-/Alkoxy- bzw. Hydroxy-Siloxane der allgemeinen Formel II
R[-O-Si(OR)₂]_{w}[-O-Si(R^{f})(R¹)₁₋ₕ(OR)ₕ]ₓ[-O-Si{R^{a}(HX)_{g}}(CH₃)₁₋ᵢ(OR)ᵢ]_{y}[-O-Si(R²)₂₋ⱼ(OR)ⱼ]_{z}(OR) (II),
worin R^{f} für eine mono-, oligo- oder polyfluorierte Organoalkyl- oder Organoarylgruppe der Formel (IIa) R³-Y_{#}-(CH₂)₂- steht, wobei R³ eine lineare, cyclische oder verzweigte mono-, oligo- oder polyfluorierte Alkylgruppe mit 1 bis 13 C-Atomen oder eine mono-, oligo- oder polyfluorierte Arylgruppe bedeutet, Y eine CH₂-, O- oder S-Gruppe mit # gleich 0 oder 1 ist,
R^{a} für eine Aminoalkylgruppe der allgemeinen Formel (IIb) H₂N(CH₂)_{§}[(NH)_{$}(CH₂)_{&}]_{β}- steht, wobei gilt 0 ≤ § ≤ 6, 0 ≤ & ≤ 6, $ gleich 0 falls § gleich 0 dann β gleich 1, $ gleich 1 falls § > 0 dann β gleich 1 oder 2, und aus der Gruppe der N-(2-Aminoethyl)-3-aminopropyl- und Triaminoalkylfunktionen ausgewählt ist,
und X für einen Säurerest aus der Reihe Chlorid, Formiat und Acetat steht mit g gleich 0 oder 1 oder 2 oder 3,
h, i und j unabhängig voneinander 0 oder 1 sind, Gruppen R² gleich oder verschieden sind und R² eine lineare, cyclische oder verzweigte Alkylgruppe mit 1 bis 18 C-Atomen darstellt,
R¹ eine lineare, cyclische oder verzweigte Alkylgruppe mit 1 bis 8 C-Atomen darstellt, Gruppen R gleich oder verschieden sind und für ein Wasserstoffatom oder eine lineare, cyclische oder verzweigte Alkylgruppe mit 1 bis 4 C-Atomen stehen oder RO eine -O-Si-Bindung zu mindestens einer Einheit aus der Reihe F, Q oder P darstellt,
x, y, z und w gleich oder verschieden sind und x sowie y für eine Zahl > 0 und z sowie w für eine Zahl ≥ 0 mit (x+y+z+w) ≥ 2 stehen,
Q für eine Alkylsilikateinheit der allgemeinen Formel III
(RO)ₙSiO_{(4-n)/2} (III),
worin Gruppen R gleich oder verschieden sind und für ein Wasserstoffatom oder eine lineare, cyclische oder verzweigte Alkylgruppe mit 1 bis 4 C-Atomen oder RO für eine -O-Si-Bindung zu mindestens einer Einheit aus der Reihe F, Q oder P stehen und n gleich 1 oder 2 oder 3 ist,
und
P für eine lineare, cyclische, verzweigte oder vernetzte Kondensat- oder Cokondensateinheit der allgemeinen Formel IV
R[-O-Si(R²)₂₋ᵥ(OR)ᵥ]ᵣ[-O-Si{R^{a}(HX)_{g}}(CH₃)₁₋ᵤ(OR)ᵤ]ₛ(OR) (IV),
worin R^{a} eine Aminoalkylgruppe der allgemeinen Formel (IVa) H₂N(CH₂)_{§}[(NH)_{$}(CH₂)_{&}]_{β}- darstellt, wobei gilt 0 ≤ § ≤ 6, 0 ≤ & ≤ 6, $ gleich 0 falls § gleich 0 dann β gleich 1, $ gleich 1 falls § > 0 dann β gleich 1 oder 2,
und X für einen Säurerest aus der Reihe Chlorid, Formiat, Acetat mit g gleich 0 oder 1 oder 2 oder 3 steht,
Gruppen R² gleich oder verschieden sind und R² eine lineare, cyclische oder verzweigte Alkylgruppe mit 1 bis 18 C-Atomen darstellt,
v gleich 0 oder 1 oder 2 ist, u für 0 oder 1 steht,
Gruppen R gleich oder verschieden sind und für ein Wasserstoffatom oder eine lineare, cyclische oder verzweigte Alkylgruppe mit 1 bis 4 C-Atomen stehen oder RO eine -O-Si-Bindung zu mindestens einer Einheit aus der Reihe F, Q oder P darstellt,
r und s gleich oder verschieden, r ≥ 0, s ≥ 0 mit (r+s) ≥ 1 sind,
stehen.

2. Zusammensetzung nach Anspruch 1,
**gekennzeichnet durch**
einen Gehalt an Organosiloxanen von 0,001 bis 99,9 Gew.-%.

3. Zusammensetzung nach Anspruch 1 oder 2,
**gekennzeichnet durch**
einen Gehalt an Alkohol aus der Reihe Methanol, Ethanol, i-Propanol, Butanol oder einem Gemisch aus mindestens zwei der zuvor genannten Alkohole.

4. Zusammensetzung nach einem der Ansprüche 1 bis 3,
**gekennzeichnet durch**
einen Gehalt an Alkohol von 0,001 bis 99,9 Gew.-%.

5. Zusammensetzung nach einem der Ansprüche 1 bis 4,
**gekennzeichnet durch**
einen Gehalt an Wasser von 0,001 bis 99,5 Gew.-%.

6. Zusammensetzung nach einem der Ansprüche 1 bis 5,
**gekennzeichnet durch**
einen Gehalt an Säure von 0,001 bis 5 Gew.-%, bezogen auf die Zusammensetzung.

7. Zusammensetzung nach einem der Ansprüche 1 bis 6,
**gekennzeichnet durch**
einen pH-Wert von 1 bis 6.

8. Zusammensetzung nach einem der Ansprüche 1 bis 7,
**gekennzeichnet durch**
einen Gehalt an Wasser und/oder im Wesentlichen wasserlöslichen Lösemitteln von 0,001 bis 99,5 Gew.-%.

9. Zusammensetzung nach einem der Ansprüche 1 bis 8,
**gekennzeichnet durch**
einen Gehalt an Benetzungshilfsmitteln von 0 bis 10 Gew.-%.

10. Zusammensetzung nach einem der Ansprüche 1 bis 9,
**gekennzeichnet durch**
einen Gehalt an anorganischen oder organischen Partikeln von 0 bis 20 Gew.-%.

11. Zusammensetzung nach einem der Ansprüche 1 bis 10, die einen Flammpunkt von 20 bis 105 °C aufweist.

12. Zusammensetzung nach einem der Ansprüche 1 bis 11, die mit Wasser verdünnbar ist.

13. Zusammensetzung nach einem der Ansprüche 1 bis 12, die eine flüssige, honigartige oder cremeartige Konsistenz besitzt.

14. Blockkondensat der allgemeinen Formel I
[F]ₑ[Q_{c}P_{b}]_{d} (I)
gemäß Anspruch 1.

15. Blockkondensat nach Anspruch 14,
**gekennzeichnet durch**
Wasserlöslichkeit.

16. Zusammensetzung oder Blockkondensat nach einem der Ansprüche 1 bis 15, erhältlich durch Umsetzen von Blockeinheiten F mit Blockeinheiten Q, P und/oder QP, indem man
- c1) Blockeinheit F gegebenenfalls mit einem Alkohol verdünnt, eine organische oder anorganische Säure und 0,5 bis 150 Mol Wasser pro Mol Si des eingesetzten Siloxans zusetzt, wobei zumindest partielle Hydrolyse der eingesetzten Blockeinheiten erfolgt, dann Blockeinheit Q sowie Blockeinheit P zugibt und reagieren lässt,
oder
- c2) Blockeinheit F gegebenenfalls mit einem Alkohol verdünnt, mit Q, P und/oder Blockeinheit QP mischt, anschließend eine organische oder anorganische Säure zusetzt und mit 0,5 bis 150 Mol Wasser pro Mol Si der eingesetzten Siloxane partiell hydrolysiert und blockkondensiert,
oder
- c3) Blockeinheit F gegebenenfalls mit einem Alkohol verdünnt, eine organische oder anorganische Säure und 0,5 bis 150 Mol Wasser pro Mol Si des eingesetzten Siloxans zugibt, dabei zumindest partiell hydrolysiert, Blockeinheit QP hinzufügt und reagieren lässt,
oder
- c4) Blockeinheiten Q, P und/oder QP gegebenenfalls mit einem Alkohol verdünnt, eine organische oder anorganische Säure und 0,5 bis 1,5 Mol Wasser pro Mol Si der eingesetzten Siloxane zusetzt und zumindest partiell hydrolysiert, dann Blockeinheit F und zusätzlich 0 bis 148,5 Mol Wasser pro Mol Si der eingesetzten Siloxane zusetzt und reagieren lässt,
oder
- c5) Blockeinheit F gegebenenfalls mit einem Alkohol verdünnt, mit 0,5 bis 150 Mol Wasser pro Mol Si der eingesetzten Siloxane sowie einer organischen oder anorganischen Säure mischt, anschließend ein Tetraalkoxysiloxan zusetzt und reagieren lässt.

17. Zusammensetzung oder Blockkondensat, erhältlich nach Anspruch 16,
wobei
man die Umsetzung bei einer Temperatur von 0 bis 100 °C durchführt.

18. Zusammensetzung oder Blockkondensat, erhältlich nach Anspruch 16 oder 17,
wobei
man die partielle Hydrolyse von Blockeinheiten bei einer Temperatur von 0 bis 60 °C durchführt.

19. Zusammensetzung oder Blockkondensat, erhältlich nach Anspruch 16 oder 17,
wobei
man die Blockkondensation bei einer Temperatur von 25 bis 100°C durchführt.

20. Zusammensetzung oder Blockkondensat, erhältlich nach Anspruch 16 oder 17,
wobei
man dem Gemisch aus Blockeinheiten oder nach der partiellen Hydrolyse der Blockeinheiten oder nach der Blockkondensation mindestens ein Benetzungshilfsmittel zusetzt.

21. Zusammensetzung oder Blockkondensat, erhältlich nach Anspruch 20,
wobei
man als Benetzungshilfsmittel ein Polyethersiloxan oder Butylglykol zusetzt.

22. Zusammensetzung oder Blockkondensat, erhältlich nach einem der Ansprüche 16 bis 21,
wobei
man dem Gemisch aus Blockeinheiten oder nach der partiellen Hydrolyse der Blockeinheiten oder nach der Blockkondensation anorganische oder organische Partikel zusetzt.

23. Zusammensetzung oder Blockkondensat, erhältlich nach einem der Ansprüche 16 bis 22,
wobei
man Blockeinheiten F oder einem Gemisch aus Blockeinheiten F und P, Q und/oder PQ oder nach der partiellen Hydrolyse besagter Blockeinheiten oder nach der Blockkondensation pro Mol, gerechnet als Si, des Blockkondensats 0,001 bis 10 Mol Tetraalkoxysilan zusetzt und nachreagieren lässt.

24. Zusammensetzung oder Blockkondensat, erhältlich nach einem der Ansprüche 16 bis 23,
wobei
man das Umsetzungsprodukt der Blockkondensation unter Rühren bei einer Temperatur von 25 bis 65 °C für eine Dauer von 5 Minuten bis 5 Stunden nachreagieren lässt.

25. Zusammensetzung oder Blockkondensat, erhältlich nach einem der Ansprüche 16 bis 23,
wobei
man im Anschluss an den Schritt der Blockkondensation oder der Nachreaktion zumindest anteilig Alkohol aus dem System entfernt.

26. Zusammensetzung oder Blockkondensat, erhältlich nach einem der Ansprüche 16 bis 25, wobei man Blockeinheiten F einsetzt, die erhalten wurden, indem man
- a1) mindestens ein Aminoalkylsilan der allgemeinen Formel (V)
H₂N(CH₂)_{§}[(NH)_{$}(CH₂)_{&}]_{β}-Si(CH₃)ₜ(OR)₃₋ₜ (V),
worin gilt 0 ≤ § ≤ 6, 0 ≤ & ≤ 6, $ gleich 0 falls § gleich 0 dann β gleich 1, $ gleich 1 falls § > 0 dann β gleich 1 oder 2, t gleich 0 oder 1 ist, und R eine lineare, cyclische oder verzweigte Alkylgruppe mit 1 bis 4 C-Atomen darstellt, und das Aminoalkylalkoxysilan aus der Gruppe von N-(2-Aminoethyl)-3-aminopropyltrimethoxysilan und Alkoxysilanen mit freien Triaminoalkylfunktionen ausgewählt ist,
und mindestens ein Fluororganosilan der allgemeinen Formel (VI)
R³-Y_{#}-(CH₂)₂-Si(R¹)ₘ(OR)₃₋ₘ (VI),
worin R³ eine lineare, cyclische oder verzweigte mono-, oligo- oder polyfluorierte Alkylgruppe mit 1 bis 13 C-Atomen oder eine mono-, oligo- oder polyfluorierte Arylgruppe darstellt, Y eine CH₂-, O- oder S-Gruppe mit # gleich 0 oder 1 ist, R¹ für eine lineare, cyclische oder verzweigte Alkylgruppe mit 1 bis 8 C-Atomen steht, m gleich 0 oder 1 ist und R eine lineare, cyclische oder verzweigte Alkylgruppe mit 1 bis 4 C-Atomen darstellt,
in einem molaren Verhältnis von ≥ 0,29 zu 1 mischt, gegebenenfalls mindestens eine organische oder anorganische Säure zugibt, gegebenenfalls mit mindestens einem Alkohol verdünnt und unter Zusatz von 0,5 bis 150 Mol Wasser pro Mol Si der eingesetzten Silankomponenten zumindest partiell hydrolysiert und cokondensiert oder
- a2) mindestens ein Fluororganosilan der allgemeinen Formel (VI)
R³-Y_{#}-(CH₂)₂-Si(R¹)ₘ(OR)₃₋ₘ (VI)
worin R³ eine lineare, cyclische oder verzweigte mono-, oligo- oder polyfluorierte Alkylgruppe mit 1 bis 13 C-Atomen oder eine mono-, oligo- oder polyfluorierte Arylgruppe darstellt, Y eine CH₂-, O- oder S-Gruppe mit # gleich 0 oder 1 ist, R¹ für eine lineare, cyclische oder verzweigte Alkylgruppe mit 1 bis 8 C-Atomen steht, m gleich 0 oder 1 ist und R eine lineare, cyclische oder verzweigte Alkylgruppe mit 1 bis 4 C-Atomen darstellt,
gegebenenfalls mit mindestens einem Alkohol verdünnt und unter Zusatz von 0,5 bis 150 Mol Wasser pro Mol Si der eingesetzten Silankomponenten sowie einem Zusatz einer organischen oder anorganischen Säure zumindest partiell hydrolysiert sowie kondensiert oder
- a3) mindestens ein Aminoalkylsilan der allgemeinen Formel (V)
H₂N(CH₂)_{§}[(NH)_{$}(CH₂)_{&}]_{β}-Si(CH₃)ₜ(OR)₃₋ₜ (V),
worin gilt 0 ≤ § ≤ 6, 0 ≤ & ≤ 6, $ gleich 0 falls § gleich 0 dann β gleich 1, $ gleich 1 falls § > 0 dann β gleich 1 oder 2, t gleich 0 oder 1 ist, und R eine lineare, cyclische oder verzweigte Alkylgruppe mit 1 bis 4 C-Atomen darstellt, und das Aminoalkylalkoxysilan aus der Gruppe von N-(2-Aminoethyl)-3-aminopropyltrimethoxysilan und Alkoxysilanen mit freien Triaminoalkylfunktionen ausgewählt ist,
und mindestens ein Fluororganosilan der allgemeinen Formel (VI)
R³-Y_{#}-(CH₂)₂-Si(R¹)ₘ(OR)₃₋ₘ (VI),
worin R³ eine lineare, cyclische oder verzweigte mono-, oligo- oder polyfluorierte Alkylgruppe mit 1 bis 13 C-Atomen oder eine mono-, oligo- oder polyfluorierte Arylgruppe darstellt, Y eine CH₂-, O- oder S-Gruppe mit # gleich 0 oder 1 ist, R¹ für eine lineare, cyclische oder verzweigte Alkylgruppe mit 1 bis 8 C-Atomen steht, m gleich 0 oder 1 ist und R eine lineare, cyclische oder verzweigte Alkylgruppe mit 1 bis 4 C-Atomen darstellt,
sowie mindestens ein Alkoxysilan der allgemeinen Formel VII
(R²)ₖSi(OR)₄₋ₖ (VII),
worin Gruppen R² gleich oder verschieden sind und R² für eine lineare, cyclische oder verzweigte Alkylgruppe mit 1 bis 18 C-Atomen steht, k gleich 0 oder 1 oder 2 ist und R eine lineare, cyclische oder verzweigte Alkylgruppe mit 1 bis 4 C-Atomen darstellt,
in einem molaren Verhältnis Aminoalkylsilan zur Summe Fluororganosilan und Alkoxysilan von ≥ 0,29 zu 1 mischt, dem vorliegenden Silangemisch pro Mol Silankomponente 0,12 bis 1 Mol einer organischen oder anorganischen Säure zugibt, gegebenenfalls mit mindestens einem Alkohol verdünnt und unter Zusatz von 0,5 bis 150 Mol Wasser pro Mol Si der eingesetzten Silankomponenten zumindest partiell hydrolysiert und cokondensiert.

27. Zusammensetzung oder Blockkondensat, erhältlich nach einem der Ansprüche 16 bis 26, wobei man Blockeinheiten Q, P und/oder QP einsetzt, die erhältlich sind, indem man
- b1) mindestens ein Tetraalkoxysilan mit einem Alkohol verdünnt und unter Zusatz von 0,5 bis 30 Mol Wasser pro Mol Alkoxysilan hydrolysiert und kondensiert oder
- b2) mindestens ein Alkylalkoxysilan der oben genannten Formel VII mit k gleich 1 oder 2 mit einem Alkohol verdünnt und unter Zusatz von 0,5 bis 30 Mol Wasser pro Mol Alkoxysilan hydrolysiert und kondensiert oder
- b3) zur Herstellung von Blockeinheiten QP mindestens ein Tetraalkoxysilan gemeinsam mit mindestens einem Alkylalkoxysilan der allgemeinen Formel VII mit k gleich 1 oder 2 in einem molaren Verhältnis von 0,5 : 1 bis 10 : 1 einsetzt, das Gemisch gegebenenfalls mit einem Alkohol verdünnt und unter Zusatz von Säure und von 0,5 bis 150 Mol Wasser pro Mol der eingesetzten Silane hydrolysiert und cokondensiert
oder
- Tetraalkoxysilan auf Blockeinheiten P kondensiert, indem man 1 Mol der Blockeinheit P, gerechnet als Si des Siloxans der Blockeinheit P, vorlegt, mit einem Alkohol verdünnt, pro Mol Si der Blockeinheit P 0,5 bis 10 Mol Tetraalkoxysilan zugibt und unter Zusatz von Säure und 0,5 bis 150 Mol Wasser partiell hydrolysiert und kondensiert
oder
- mindestens ein Alkylalkoxysilan auf Blockeinheiten Q kondensiert, indem man 0,5 bis 10 Mol der Blockeinheit Q, gerechnet als Si des Siloxans der Blockeinheit Q, vorlegt, mit einem Alkohol verdünnt, 1 Mol mindestens eines Alkylalkoxysilans der allgemeinen Formel VII zugibt und unter Zusatz von Säure und 0,5 bis 150 Mol Wasser partiell hydrolysiert und kondensiert
oder
- Blockeinheiten P und Q kondensiert, indem man Blockeinheiten P aus b2) und Q aus b1) mit einem molaren Verhältnis, jeweils bezogen auf ihren Si-Anteil, von 1 : 10 bis 2 : 1 im Gemisch vorlegt, gegebenenfalls mit einem Alkohol verdünnt und unter Zusatz von 0,5 bis 30 Mol Wasser pro Mol Si des vorliegenden Siloxangemisches hydrolysiert und blockkondensiert.

28. Verfahren zur Herstellung von Zusammensetzungen oder Blockkondensaten nach einem der Ansprüche 1 bis 27,
bei dem
man Blockeinheiten F mit Blockeinheiten Q, P und/oder QP umsetzt, indem man
- c1) Blockeinheit F gegebenenfalls mit einem Alkohol verdünnt, eine organische oder anorganische Säure und 0,5 bis 150 Mol Wasser pro Mol Si des eingesetzten Siloxans zusetzt, wobei zumindest partielle Hydrolyse der eingesetzten Blockeinheiten erfolgt, dann Blockeinheit Q sowie Blockeinheit P zugibt und reagieren lässt,
oder
- c2) Blockeinheit F gegebenenfalls mit einem Alkohol verdünnt, mit Q, P und/oder Blockeinheit QP mischt, anschließend eine organische oder anorganische Säure zusetzt und mit 0,5 bis 150 Mol Wasser pro Mol Si der eingesetzten Siloxane partiell hydrolysiert und blockkondensiert,
oder
- c3) Blockeinheit F gegebenenfalls mit einem Alkohol verdünnt, eine organische oder anorganische Säure und 0,5 bis 150 Mol Wasser pro Mol Si des eingesetzten Siloxans zugibt, dabei zumindest partiell hydrolysiert, Blockeinheit QP hinzufügt und reagieren lässt,
oder
- c4) Blockeinheiten Q, P und/oder QP gegebenenfalls mit einem Alkohol verdünnt, eine organische oder anorganische Säure und 0,5 bis 1,5 Mol Wasser pro Mol Si der eingesetzten Siloxane zusetzt und zumindest partiell hydrolysiert, dann Blockeinheit F und zusätzlich 0 bis 148,5 Mol Wasser pro Mol Si der eingesetzten Siloxane zusetzt und reagieren lässt,
oder
- c5) Blockeinheit F gegebenenfalls mit einem Alkohol verdünnt, mit 0,5 bis 150 Mol Wasser pro Mol Si der eingesetzten Siloxane sowie einer organischen oder anorganischen Säure mischt, anschließend ein Tetraalkoxysilan zusetzt und reagieren lässt.

29. Verwendung eines Blockkondensats oder einer Zusammensetzung, die mindestens ein Blockkondensat enthält, nach einem der Ansprüchen 1 bis 15, oder eines Blockkondensats oder einer Zusammensetzung, erhältlich nach einem der Ansprüche 16 bis 27, oder eines Blockkondensats oder einer Zusammensetzung, hergestellt nach Anspruch 28, als ein Mittel oder in einem Mittel für Easy-to-clean-Anwendungen und/oder Korrosionsschutz-Anwendungen oder in Mitteln für Easy-to-clean-Anwendungen und/oder Korrosionsschutz-Anwendungen oder in Farben und Lacken.

30. Verwendung eines Blockkondensats oder einer Zusammensetzung, die mindestens ein Blockkondensat enthält, nach einem der Ansprüche 1 bis 15, oder eines Blockkondensats oder einer Zusammensetzung, erhältlich nach einem der Ansprüche 16 bis 27, oder eines Blockkondensats oder einer Zusammensetzung, hergestellt nach Anspruch 28, als Einsatzstoff für die Herstellung eines Mittels nach Anspruch 29.

31. Verwendung eines Blockkondensats oder einer Zusammensetzung, die mindestens ein Blockkondensat enthält, nach einem der Ansprüche 1 bis 15, oder eines Blockkondensats oder einer Zusammensetzung, erhältlich nach einem der Ansprüche 16 bis 27, oder eines Blockkondensats oder einer Zusammensetzung, hergestellt nach Anspruch 28, für die Erzeugung von Beschichtungen mit hoher Abriebbeständigkeit.

32. Beschichtung, erhältlich durch Anwendung eines Blockkondensats, einer Zusammensetzung bzw. eines Mittels nach den Ansprüchen 1 bis 31.

33. Artikel, dessen Oberflächen mit einer Beschichtung nach Anspruch 32 ausgestattet sind.

## Revendications

1. Composition qui comprend
(i) au moins un condensat à blocs de siloxanes organofonctionnels de la formule générale (I)
[F]ₑ[Q_{c}F_{b}]_{d} (I)
et/ou
(ii) au moins un mélange composé de e[F] et d(c[Q]+b[P]), et lorsqu'il convient, d[Q_{c}P_{b}],
où dans chaque cas indépendamment de l'autre dans les éléments (i) et (ii) susmentionnés,
les motifs de blocs F, Q, P et/ou QP peuvent être liés les uns aux autres au moyen d'au moins une liaison Si-O-Si,
e, c et d sont identiques ou différents et chacun peut être un nombre valant de 1 à 10, et b peut être un nombre valant de 0 à 10,
F est un motif de co-condensat linéaire, cyclique, ramifié ou réticulé de la série des fluoroorgano-, aminoalkyl-, alkyl-, alcoxy- ou hydroxysiloxanes de la formule générale (II)
R[-O-Si(OR)₂]_{w}[-O-Si(R^{f})(R¹)₁₋ₕ(OR)ₕ]ₓ[-O-Si{R^{a}(HX)_{g}}(CH₃)₁₋ᵢ(OR)ᵢ]_{y}[-O-Si(R²)₂₋ⱼ(OR)ⱼ]_{z}(OR) (II)
où R^{f} représente un groupe organoalkyle ou organoaryle mono-, oligo- ou polyfluoré de la formule (IIa) R³-Y_{#}- (CH₂)₂- où R³ représente un groupe alkyle linéaire, cyclique ou ramifié mono-, oligo- ou polyfluoré portant 1 à 13 atomes de carbone ou un groupe aryle mono-, oligo- ou polyfluoré, Y représente un groupe CH₂, O ou S, et # vaut 0 ou 1,
R^{a} représente un groupe aminoalkyle de la formule générale (IIb) H₂N(CH₂)_{§}[(NH)_{$}(CH₂)_{&}]_{β}- où 0 ≤ § ≤ 6, 0 ≤ & ≤ 6, $ = 0, si § = 0 alors β = 1 et $ = 1, si § > 0 alors β = 1 ou 2, et est choisi dans le groupe des fonctions N-(2-aminoéthyl)-3-aminopropyle et triaminoalkyle, X représente un radical acide de la série chlorure, formate et acétate, et g vaut 0, 1, 2 ou 3,
h, i et j, indépendamment les uns des autres, valent 0 ou 1,
les groupes R² sont identiques ou différents, et chaque R² représente un groupe alkyle linéaire, cyclique ou ramifié portant 1 à 18 atomes de carbone,
R¹ représente un groupe alkyle linéaire, cyclique ou ramifié portant 1 à 8 atomes de carbone,
les groupes R sont identiques ou différents, et représentent un atome d'hydrogène ou un groupe alkyle linéaire, cyclique ou ramifié portant 1 à 4 atomes de carbone, ou bien RO représente une liaison -O-Si- avec au moins un motif de la série F, Q et P,
x, y, z et w sont identiques ou différents, et x ainsi que y représentent un nombre > 0, et z ainsi que w représentent un nombre ≥ 0, où (x+y+z+w) ≥ 2,
Q est un motif silicate d'alkyle de la formule générale (III)
(RO)ₙSiO_{(4-n)/2} (III)
où les groupes R sont identiques ou différents, et représentent un atome d'hydrogène ou un groupe alkyle linéaire, cyclique ou ramifié portant 1 à 4 atomes de carbone, ou bien RO représente une liaison -O-Si- avec au moins un motif de la série F, Q et P, et
n vaut 1, 2 ou 3,
et
P est un motif de condensat linéaire, cyclique, ramifié ou réticulé, ou respectivement, un motif de co-condensat de la formule générale (IV)
R[-O-Si(R²)₂₋ᵥ(OR)ᵥ]ᵣ[-O-Si{R^{a}(HX)_{g}} (CH₃)₁₋ᵤ(OR)ᵤ]ₛ(OR) (IV)
où R^{a} représente un groupe aminoalkyle de la formule générale (IVa) H₂N(CH₂)_{§}[(NH)_{$}(CH₂)_{&}]_{β}- où 0 ≤ § ≤ 6, 0 ≤ & ≤ 6, $ = 0, si § = 0 alors β = 1 et $ = 1, si § > 0 alors β = 1 ou 2, X représente un radical acide de la série chlorure, formate et acétate, et g vaut 0, 1, 2 ou 3,
les groupes R² sont identiques ou différents, et chaque R² représente un groupe alkyle linéaire, cyclique ou ramifié portant 1 à 18 atomes de carbone,
v vaut 0, 1 ou 2, et u vaut 0 ou 1,
les groupes R sont identiques ou différents, et représentent un atome d'hydrogène ou un groupe alkyle linéaire, cyclique ou ramifié portant 1 à 4 atomes de carbone, ou bien RO représente une liaison -O-Si- avec au moins un motif de la série F, Q et P, et
r et s sont identiques ou différents, et r ≥ 0, s ≥ 0, avec (r+s) ≥ 1.

2. Composition selon la revendication 1, qui a une teneur en organosiloxanes de 0,001 à 99,9 % en poids.

3. Composition selon la revendication 1 ou 2, qui a une certaine teneur en alcool de la série méthanol, éthanol, isopropranol, butanol, et un mélange composé d'au moins deux des alcools susmentionnés.

4. Composition selon l'une quelconque des revendications 1 à 3, qui a une teneur en alcool de 0,001 à 99,9 % en poids.

5. Composition selon l'une quelconque des revendications 1 à 4, qui a une teneur en eau de 0,001 à 99,5 % en poids.

6. Composition selon l'une quelconque des revendications 1 à 5, qui a une teneur en acide, rapportée à la composition, de 0,001 à 5 % en poids.

7. Composition selon l'une quelconque des revendications 1 à 6, qui a un pH de 1 à 6.

8. Composition selon l'une quelconque des revendications 1 à 7, qui a une teneur en eau et/ou en solvants sensiblement hydrosolubles de 0,001 à 99,5 % en poids.

9. Composition selon l'une quelconque des revendications 1 à 8, qui a une teneur en adjuvants de mouillage de 0 à 10 % en poids.

10. Composition selon l'une quelconque des revendications 1 à 9, qui a une teneur en particules inorganiques ou organiques de 0 à 20 % en poids.

11. Composition selon l'une quelconque des revendications 1 à 10, qui a un point d'éclair de 20 à 105 °C.

12. Composition selon l'une quelconque des revendications 1 à 11, qui est diluable à l'eau.

13. Composition selon l'une quelconque des revendications 1 à 12, qui a une consistance liquide, sirupeuse ou crémeuse.

14. Condensat à blocs de la formule générale (I)
[F]ₑ[Q_{c}P_{b}]_{d} (I)
selon la revendication 1.

15. Condensat à blocs selon la revendication 14, qui est hydrosoluble.

16. Composition ou condensat à blocs selon l'une quelconque des revendications 1 à 15, pouvant être obtenus par réaction de motifs de bloc F avec des motifs de blocs Q, P et/ou QP
- c1) en diluant des motifs de bloc F, éventuellement avec un alcool, en ajoutant un acide organique ou inorganique et 0,5 à 150 moles d'eau par mole de Si du siloxane utilisé, une hydrolyse au moins partielle des motifs de bloc utilisés ayant alors lieu, puis en ajoutant des motifs de bloc Q et des motifs de bloc P, et en laissant le mélange réagir,
ou
- c2) en diluant des motifs de bloc F, éventuellement avec un alcool, en mélangeant avec des motifs de blocs Q, P et/ou QP, puis en ajoutant un acide organique ou inorganique et, en utilisant 0,5 à 150 moles d'eau par mole de Si des siloxanes utilisés, en réalisant une hydrolyse partielle et une condensation des blocs,
ou
- c3) en diluant des motifs de bloc F, éventuellement avec un alcool, en ajoutant un acide organique ou inorganique et 0,5 à 150 moles d'eau par mole de Si du siloxane utilisé, avec une hydrolyse au moins partielle, en ajoutant des motifs de bloc QP, et en laissant le mélange réagir,
ou
- c4) en diluant des motifs de blocs Q, P et/ou QP, éventuellement avec un alcool, en ajoutant un acide organique ou inorganique et 0,5 à 1,5 mole d'eau par mole de Si des siloxanes utilisés, et en hydrolysant au moins partiellement, puis en ajoutant des motifs de bloc F ainsi que 0 à 148,5 moles d'eau par mole de Si des siloxanes utilisés, et en laissant le mélange réagir,
ou
- c5) en diluant des motifs de bloc F, éventuellement avec un alcool, en mélangeant avec 0,5 à 150 moles d'eau par mole de Si des siloxanes utilisés, et avec un acide organique ou inorganique, puis en ajoutant un tétraalcoxysiloxane, et en laissant le mélange réagir.

17. Composition ou condensat à blocs pouvant être obtenus selon la revendication 16, dans lesquels on réalise la réaction à une température de 0 à 100 °C.

18. Composition ou condensat à blocs pouvant être obtenus selon la revendication 16 ou 17, dans lesquels on réalise l'hydrolyse partielle des motifs de blocs à une température de 0 à 60 °C.

19. Composition ou condensat à blocs pouvant être obtenus selon la revendication 16 ou 17, dans lesquels on réalise la condensation des blocs à une température de 25 à 100 °C.

20. Composition ou condensat à blocs pouvant être obtenus selon la revendication 16 ou 17, dans lesquels on ajoute au moins un adjuvant de mouillage au mélange composé des motifs de blocs, ou après l'hydrolyse partielle des motifs de blocs, ou après la condensation des blocs.

21. Composition ou condensat à blocs pouvant être obtenus selon la revendication 20, dans lesquels on ajoute un polyéthersiloxane ou du butylglycol comme adjuvant de mouillage.

22. Composition ou condensat à blocs pouvant être obtenus selon l'une quelconque des revendications 16 à 21, dans lesquels on ajoute des particules inorganiques ou organiques au mélange composé des motifs de blocs, ou après l'hydrolyse partielle des motifs de blocs, ou après la condensation des blocs.

23. Composition ou condensat à blocs pouvant être obtenus selon l'une quelconque des revendications 16 à 22, dans lesquels on ajoute 0,001 à 10 moles de tétraalcoxysilane par mole, calculées en Si, du condensat à blocs aux motifs de bloc F ou à un mélange composé de motifs de blocs F et P, Q et/ou PQ, ou après l'hydrolyse partielle desdits motifs de blocs, ou après la condensation des blocs, et on laisse la réaction se poursuivre.

24. Composition ou condensat à blocs pouvant être obtenus selon l'une quelconque des revendications 16 à 23, dans lesquels on laisse le produit de la réaction de condensation des blocs continuer à réagir pendant une période de 5 minutes à 5 heures à une température de 25 à 65 °C, sous agitation.

25. Composition ou condensat à blocs pouvant être obtenus selon l'une quelconque des revendications 16 à 23, dans lesquels on retire au moins une partie de l'alcool du système après l'étape de condensation des blocs ou l'étape de réaction poursuivie.

26. Composition ou condensat à blocs pouvant être obtenus selon l'une quelconque des revendications 16 à 25, dans lesquels on utilise des motifs de bloc F obtenus
- a1) en mélangeant au moins un aminoalkylsilane de la formule générale (V)
H₂N(CH₂)_{§}[(NH)_{$}(CH₂)_{&}]_{β}-Si(CH₃)ₜ(OR)₃₋ₜ (V)
où 0 ≤ § ≤ 6, 0 ≤ & ≤ 6, $ = 0, si § = 0 alors β = 1 et $ = 1, si § > 0 alors β = 1 ou 2, t = 0 ou 1, et R représente un groupe alkyle linéaire, cyclique ou ramifié portant 1 à 4 atomes de carbone, l'aminoalkylalcoxysilane étant choisi dans le groupe du N-(2-aminoéthyl)-3-aminopropyl-triméthoxysilane et des alcoxysilanes ayant des fonctions triaminoalkyle libres,
et au moins un fluoroorganosilane de la formule générale (VI)
R³-Y_{#}- (CH₂)₂-Si (R¹)ₘ(OR)₃₋ₘ (VI)
où R³ représente un groupe alkyle linéaire, cyclique ou ramifié mono-, oligo- ou polyfluoré portant 1 à 13 atomes de carbone ou un groupe aryle mono-, oligo- ou polyfluoré, Y représente un groupe CH₂, O ou S, # vaut 0 ou 1, R¹ représente un groupe alkyle linéaire, cyclique ou ramifié portant 1 à 8 atomes de carbone, m vaut 0 ou 1, et R représente un groupe alkyle linéaire, cyclique ou ramifié portant 1 à 4 atomes de carbone,
dans un rapport molaire ≥ 0,29:1, en ajoutant éventuellement au moins un acide organique ou inorganique, en diluant éventuellement avec au moins un alcool, et avec l'addition de 0,5 à 150 moles d'eau par mole de Si des composants de silane utilisés, en réalisant une hydrolyse au moins partielle et une cocondensation, ou
- a2) en diluant au moins un fluoroorganosilane de la formule générale (VI)
R³-Y#- (CH₂)₂-Si (R¹)ₘ(OR)₃₋ₘ (VI)
où R³ représente un groupe alkyle linéaire, cyclique ou ramifié mono-, oligo- ou polyfluoré portant 1 à 13 atomes de carbone ou un groupe aryle mono-, oligo- ou polyfluoré, Y représente un groupe CH₂, O ou S, # vaut 0 ou 1, R¹ représente un groupe alkyle linéaire, cyclique ou ramifié portant 1 à 8 atomes de carbone, m vaut 0 ou 1, et R représente un groupe alkyle linéaire, cyclique ou ramifié portant 1 à 4 atomes de carbone,
éventuellement avec au moins un alcool, et avec l'addition de 0,5 à 150 moles d'eau par mole de Si des composants de silane utilisés, et l'addition d'un acide organique ou inorganique, en réalisant une hydrolyse au moins partielle et une cocondensation, ou
- a3) en mélangeant au moins un aminoalkylsilane de la formule générale (V)
H₂N(CH₂)_{§}[(NH)_{$}(CH₂)_{&}]_{β}-Si(CH₃)ₜ(OR)₃₋ₜ (V)
où 0 ≤ § ≤ 6, 0 ≤ & ≤ 6, $ = 0, si § = 0 alors β = 1 et $ = 1, si § > 0 alors β = 1 ou 2, t = 0 ou 1, et R représente un groupe alkyle linéaire, cyclique ou ramifié portant 1 à 4 atomes de carbone, l'aminoalkylalcoxysilane étant choisi dans le groupe du N-(2-aminoéthyl)-3-aminopropyl-triméthoxysilane et des alcoxysilanes ayant des fonctions triaminoalkyle libres,
au moins un fluoroorganosilane de la formule générale (VI)
R³-Y_{#}-(CH₂)₂-Si (R¹)ₘ(OR)₃₋ₘ (VI)
où R³ représente un groupe alkyle linéaire, cyclique ou ramifié mono-, oligo- ou polyfluoré portant 1 à 13 atomes de carbone ou un groupe aryle mono-, oligo- ou polyfluoré, Y représente un groupe CH₂, O ou S, # vaut 0 ou 1, R¹ représente un groupe alkyle linéaire, cyclique ou ramifié portant 1 à 8 atomes de carbone, m vaut 0 ou 1, et R représente un groupe alkyle linéaire, cyclique ou ramifié portant 1 à 4 atomes de carbone,
et au moins un alcoxysilane de la formule générale (VII)
(R²)ₖSi(OR)₄₋ₖ (VII)
où les groupes R² sont identiques ou différents, et chaque R² représente un groupe alkyle linéaire, cyclique ou ramifié portant 1 à 18 atomes de carbone, k vaut 0, 1 ou 2, et R représente un groupe alkyle linéaire, cyclique ou ramifié portant 1 à 4 atomes de carbone,
dans un rapport molaire ≥ 0,29:1 pour le rapport de l'aminoalkylsilane au total du fluoroorganosilane et de l'alcoxysilane, en ajoutant 0,12 à 1 mole d'un acide organique ou inorganique par mole des composants de silane au mélange de silanes présent, en diluant éventuellement avec au moins un alcool, et avec l'addition de 0,5 à 150 moles d'eau par mole de Si des composants de silane utilisés, en réalisant une hydrolyse au moins partielle et une cocondensation.

27. Composition ou condensat à blocs pouvant être obtenus selon l'une quelconque des revendications 16 à 26, dans lesquels on utilise des motifs de blocs Q, P et/ou QP pouvant être obtenus
- b1) en diluant au moins un tétraalcoxysilane avec un alcool, et avec l'addition de 0,5 à 30 moles d'eau par mole d'alcoxysilane, en réalisant une hydrolyse et une condensation, ou
- b2) en diluant au moins un alkylalcoxysilane de la formule (VII) susmentionnée où k vaut 1 ou 2 avec un alcool, et avec l'addition de 0,5 à 30 moles d'eau par mole d'alcoxysilane, en réalisant une hydrolyse et une condensation, ou
- b3) pour préparer des motifs de bloc QP,
- en utilisant au moins un tétraalcoxysilane avec au moins un alkylalcoxysilane de la formule générale (VII) où k vaut 1 ou 2 dans un rapport molaire de 0,5:1 à 10:1, en diluant le mélange, éventuellement avec un alcool, et avec l'addition de 0,5 à 150 moles d'eau par mole des silanes utilisés, en réalisant une hydrolyse et une cocondensation,
ou
- en condensant un tétraalcoxysilane sur des motifs de bloc P, en utilisant comme charge initiale 1 mole de motifs de bloc P, calculée en Si du siloxane du motif de bloc P, en diluant avec un alcool, en ajoutant 0,5 à 10 moles de tétraalcoxysilane par mole de Si du motif de bloc P, et avec l'addition de 0,5 à 150 moles d'eau, en réalisant une hydrolyse et une condensation,
ou
- en condensant au moins un alkylalcoxysilane sur des motifs de bloc Q, en utilisant comme charge initiale 0,5 à 10 moles de motifs de bloc Q, calculées en Si du siloxane du motif de bloc Q, en diluant avec un alcool, en ajoutant 1 mole d'au moins un alkylalcoxysilane de la formule générale (VII), et avec l'addition de 0,5 à 150 moles d'eau, en réalisant une hydrolyse partielle et une condensation,
ou
- en condensant des motifs de blocs P et Q, en utilisant comme charge initiale des motifs de bloc P composés de b2) et des motifs de bloc Q composés de b1) dans un rapport molaire, dans chaque cas basé sur leur teneur en Si, de 1:10 à 2:1 dans le mélange, en diluant éventuellement avec un alcool, et avec l'addition de 0,5 à 30 moles d'eau par mole de Si du mélange de siloxanes présent, en réalisant une hydrolyse et une condensation des blocs.

28. Procédé de préparation de compositions ou de condensats en blocs selon l'une quelconque des revendications 1 à 27, qui comprend la réaction de motifs de bloc F avec des motifs de blocs Q, P et/ou QP
- c1) en diluant des motifs de bloc F, éventuellement avec un alcool, en ajoutant un acide organique ou inorganique et 0,5 à 150 moles d'eau par mole de Si du siloxane utilisé, une hydrolyse au moins partielle des motifs de bloc utilisés ayant alors lieu, puis en ajoutant des motifs de bloc Q et des motifs de bloc P, et en laissant le mélange réagir,
ou
- c2) en diluant des motifs de bloc F, éventuellement avec un alcool, en mélangeant avec des motifs de blocs Q, P et/ou QP, puis en ajoutant un acide organique ou inorganique et, en utilisant 0,5 à 150 moles d'eau par mole de Si des siloxanes utilisés, en réalisant une hydrolyse partielle et une condensation des blocs,
ou
- c3) en diluant des motifs de bloc F, éventuellement avec un alcool, en ajoutant un acide organique ou inorganique et 0,5 à 150 moles d'eau par mole de Si du siloxane utilisé, avec une hydrolyse au moins partielle, en ajoutant des motifs de bloc QP, et en laissant le mélange réagir,
ou
- c4) en diluant des motifs de blocs Q, P et/ou QP, éventuellement avec un alcool, en ajoutant un acide organique ou inorganique et 0,5 à 1,5 mole d'eau par mole de Si des siloxanes utilisés, et en hydrolysant au moins partiellement, puis en ajoutant des motifs de bloc F ainsi que 0 à 148,5 moles d'eau par mole de Si des siloxanes utilisés, et en laissant le mélange réagir,
ou
- c5) en diluant des motifs de bloc F, éventuellement avec un alcool, en mélangeant avec 0,5 à 150 moles d'eau par mole de Si des siloxanes utilisés, et avec un acide organique ou inorganique, puis en ajoutant un tétraalcoxysiloxane, et en laissant le mélange réagir.

29. Utilisation d'un condensat à blocs ou d'une composition qui comprend au moins un condensat à blocs, selon l'une quelconque des revendications 1 à 15, ou d'un condensat à blocs ou d'une composition pouvant être obtenus selon l'une quelconque des revendications 16 à 27, ou d'un condensat à blocs ou d'une composition préparés selon la revendication 28, comme agent, ou dans un agent, pour des applications de nettoyage facile et/ou des applications de protection contre la corrosion, ou dans des agents pour des applications de nettoyage facile et/ou des applications de protection contre la corrosion, ou dans des peintures, des encres et des laques.

30. Utilisation d'un condensat à blocs ou d'une composition qui comprend au moins un condensat à blocs, selon l'une quelconque des revendications 1 à 15, ou d'un condensat à blocs ou d'une composition pouvant être obtenus selon l'une quelconque des revendications 16 à 27, ou d'un condensat à blocs ou d'une composition préparés selon la revendication 28, comme matière première pour préparer un agent selon la revendication 29.

31. Utilisation d'un condensat à blocs ou d'une composition qui comprend au moins un condensat à blocs, selon l'une quelconque des revendications 1 à 15, ou d'un condensat à blocs ou d'une composition pouvant être obtenus selon l'une quelconque des revendications 16 à 27, ou d'un condensat à blocs ou d'une composition préparés selon la revendication 28, 29 ou 30, pour la fabrication de revêtements avec une grande résistance à l'abrasion.

32. Revêtement pouvant être obtenu par l'utilisation d'un condensat à blocs ou d'une composition ou d'un agent selon les revendications 1 à 31.

33. Article dont les surfaces ont été dotées d'un revêtement selon la revendication 32.
